# EUROPÄISCHE PATENTSCHRIFT

(11) **EP 4 572 102 B1**
(45) Veröffentlichungstag und Bekanntmachung des Hinweises auf die Patenterteilung: **23.09.2026**
(21) Anmeldenummer: 25173605.4
(22) Anmeldetag: 10.05.2022
(51) Int. Cl.: H02K 5/128, H02K 5/22, H02K 41/03, H02K 5/132

(54) **PLANARANTRIEBSSYSTEM**
PLANAR DRIVE SYSTEM
SYSTÈME D'ENTRAÎNEMENT PLANAIRE

(30) Priorität: 11.05.2021 DE 102021112269
(43) Veröffentlichungstag der Anmeldung: 18.06.2025
(62) Dokumentnummer(n) der früheren Anmeldung(en) nach Art. 76 EPÜ: 22728793.5 / 4 338 261
(73) Patentinhaber: Beckhoff Automation GmbH, 33415 Verl (DE)
(72) Erfinder: PRUESSMEIER, Uwe, 32657 Lemgo (DE); NEUFELD, Jörg, 33104 Paderborn (DE); BECKHOFF, Johannes, 33758 Schloß Holte-Stukenbrock (DE); SCHULTE, Felix, 33397 Rietberg (DE)
(74) Vertreter: Patentanwaltskanzlei WILHELM & BECK

(56) Entgegenhaltungen:
- DE-A1- 102019 117 431
- US-A1- 2009 179 066
- US-A1- 2014 346 900
- US-A1- 2016 070 181
- US-A1- 2019 375 597

## Beschreibung

Die Erfindung betrifft ein Planarantriebssystem.

Die vorliegende Patentanmeldung beansprucht die Priorität der deutschen Patentanmeldung DE 10 2021 112 269.4.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanent erregten elektromagnetischen Planarmotor mit einem planaren Stator und einen auf dem Stator in mindestens zwei Richtungen beweglichen Läufer umfassen.

Bei einem permanent erregten elektromagnetischen Planarmotor wird dadurch eine Antriebskraft auf den Läufer ausgeübt, dass bestromte Spulengruppen einer Statoreinheit mit Antriebsmagneten mehrerer Magnetanordnungen des Läufers magnetisch wechselwirken. Aus dem Stand der Technik sind Planarantriebssysteme mit rechteckigen und längsgestreckten Spulengruppen und rechteckigen und längsgestreckten Magnetanordnungen des Läufers bekannt. Ein solches Planarantriebssystem wird beispielsweise in der Offenlegungsschrift DE 10 2017 131 304 A1 beschrieben. Mit einem solchen Planarantriebssystem wird insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulengruppen angeordnet sind, parallel zur Statorfläche frei beweglich und senkrecht zur Statorfläche zumindest in verschiedenen Abständen zur Statorfläche bewegt werden kann. Ferner ist ein solches Planarantriebssystem in der Lage, den Läufer um einige Grad zu kippen und um einige Grad zu rotieren. Die letztgenannten Bewegungen sind dabei oberhalb von beliebigen Punkten der Statorfläche durchführbar. Der Läufer kann insbesondere um bis zu 20° aus einer Normallage heraus rotiert werden.

Die Läufer eines Planarantriebssystems weisen typischerweise einen Gehäusegrundkörper auf, in den die Magnetanordnungen eingesetzt werden. Dabei kann es vorgesehen sein, dass die Magnetanordnungen mit dem Gehäusegrundkörper verklebt werden. Es kann vorgesehen sein, dass das Planarantriebssystem innerhalb von aggressiven Fluiden oder in sensiblen Umgebungen eingesetzt werden soll. Sensible Umgebungen können dabei insbesondere Reinräume oder reinraumartige Umgebungen oder aber auch Vakuumkammern umfassen. Soll der Läufer in einer aggressiven Umgebung wie beispielsweise innerhalb von wasserbasierten Flüssigkeiten wie beispielsweise Wasser, Säuren oder Laugen oder innerhalb von organischen Lösungsmitteln eingesetzt werden, kann es vorkommen, dass die Flüssigkeiten den Kleber, mit dem die Magnetanordnungen in den Gehäusegrundkörper eingeklebt sind, angreifen und so mittel- bis langfristig zu einer Beschädigung beziehungsweise Zerstörung des Läufers führen. Soll der Läufer in einem Reinraum oder in einem Vakuum eingesetzt werden, kann es vorkommen, dass der zum Einkleben der Magnetanordnungen in den Gehäusegrundkörper verwendete Kleber ausgast und somit den Reinraum verunreinigt beziehungsweise beim Einsatz im Vakuum, insbesondere im Ultrahochvakuum, eine erforderliche Vakuumqualität nicht erreicht werden kann.

Ein Planarantriebssystem mit den Merkmalen des Oberbegriffs des Anspruch 1 ist aus der DE 10 2019 117431 A1 bekannt.

Es ist eine Aufgabe der Erfindung, ein Planarantriebssystem anzugeben, der einerseits in aggressiven Medien und andererseits auch in sensiblen Umgebungen eingesetzt werden kann.

Diese Aufgaben werden mit einem erfindungsgemäßen Planarantriebssystem nach Anspruch 1 gelöst. Vorteilhafte Weiterbildungen der Erfindung sind in den abhängigen Patentansprüchen 2 - 9 defniert.

Ein Läufer im einem Planarantriebssystem weist ein Gehäuse und zumindest eine Magnetanordnung auf. Die Magnetanordnung kann dabei, wie in der Offenlegungsschrift DE 10 2017 131 304 A1 beschrieben als Halbach-Array ausgestaltet sein. Ebenfalls können, wie in der genannten Offenlegungsschrift beschrieben, vier solche Magnetanordnungen angeordnet werden, um einen Antrieb des Läufers in zwei Richtungen zu ermöglichen. Das Gehäuse des Läufers weist einen Gehäusegrundkörper und eine Abdeckung auf. Die Magnetanordnung beziehungsweise, falls mehrere Magnetanordnungen vorliegen, alle Magnetanordnungen sind dabei in einer Ausnehmung des Gehäusegrundkörpers angeordnet. Die Abdeckung ist derart am Gehäusegrundkörper angebracht, dass das Gehäuse fluiddicht ausgestaltet ist, und die Abdeckung die Ausnehmung abdeckt. Die Magnetanordnung beziehungsweise die Magnetanordnungen sind in einem Inneren des fluiddichten Gehäuses angeordnet.

Dadurch, dass die Magnetanordnung innerhalb des fluiddichten Gehäuses angeordnet ist, kann erreicht werden, dass beim Einsatz des Läufers in aggressiven Umgebungen die aggressiven Fluide nicht in das fluiddichte Gehäuse eindringen und somit einen gegebenenfalls zum Einkleben der Magnetanordnung in den Gehäusegrundkörper verwendeten Klebstoff nicht angreifen können. Ferner können die aggressiven Fluide auch die Magnetanordnung selbst nicht angreifen, wenn die Magnetanordnung im Inneren des fluiddichten Gehäuses angeordnet ist. Soll der Läufer in einer sensiblen Umgebung eingesetzt werden, so kann durch das fluiddichte Gehäuse erreicht werden, dass durch die Magnetanordnung beziehungsweise einen zum Einkleben der Magnetanordnung in den Gehäusegrundkörper verwendete Klebstoff nicht in einen Bereich außerhalb des fluiddichten Gehäuses gelangen kann. Dadurch kann erreicht werden, dass beispielsweise in einem Reinraum die erforderliche Reinheit und in einem Vakuum die erforderliche Vakuumqualität erreicht werden können. Insbesondere beim Einsatz im Vakuum könnten Magnetanordnungen oder zum Einkleben der Magnetanordnung in den Gehäusegrundkörper verwendete Klebstoffe ausgasen und somit permanent Verunreinigungen bereitstellen, sodass beispielsweise ein Ultrahochvakuum nicht erreicht werden kann. Die Abdeckung ist dabei nichtmagnetisch ausgestaltet, wobei das insbesondere bedeuten kann, dass die Abdeckung nicht ferromagnetisch, sondern diamagnetisch oder paramagnetisch ist.

Die Abdeckung des Läufers weist eine relative magnetische Permeabilität kleiner als zehn, insbesondere kleiner als zwei und bevorzugt kleiner als 1,01 auf.

In einer Ausführungsform des Läufers schwächt die Abdeckung ein Magnetfeld der Magnetanordnung außerhalb des Gehäuses um maximal 25% ab. Bevorzugt beträgt die Abschwächung maximal 10% und insbesondere bevorzugt maximal 5%. Gegebenenfalls kann die Abdeckung auch derart ausgestaltet sein, dass ein Magnetfeld der Magnetanordnung im Wesentlichen gar nicht, also maximal um 1% abgeschwächt wird. Dadurch wird ermöglicht, den Läufer weiterhin innerhalb des Planarantriebssystems zu betreiben, da das Magnetfeld der Magnetanordnungen außerhalb des fluiddichten Gehäuses des Läufers immer noch so stark vorhanden ist, dass ein Statormagnetfeld des Planarantriebssystems weiter auf den Läufer einwirken kann.

In einer Ausführungsform sind der Gehäusegrundkörper und die Abdeckung metallisch ausgeführt. Die Abdeckung und der Gehäusegrundkörper sind laserverschweißt. Insbesondere kann vorgesehen sein, dass der Gehäusegrundkörper und die Abdeckung aus Edelstahl, Aluminium oder einer Aluminium-Legierung bestehen. Schweißverbindungen können generell fluiddicht, also gas- beziehungsweise flüssigkeitsdicht ausgestaltet werden, sodass einerseits, wenn der Läufer innerhalb einer Flüssigkeit betrieben wird, keine Flüssigkeit ins Innere des Gehäuses gelangen kann, und andererseits, wenn der Läufer in einem Reinraum oder einem Vakuum betrieben wird, Flüssigkeiten oder Gase das Innere des Gehäuses nicht verlassen können. Um die Abdeckung mit dem Gehäusegrundkörper zu verschweißen, hat es sich als vorteilhaft herausgestellt, ein Laserschweißverfahren zu verwenden. Laserschweißverfahren eignen sich insbesondere deshalb, da Laserstrahlung von dem durchaus starken Magnetfeld der Magnetanordnungen nicht beeinflusst werden und somit ein zielgenaues und fluiddichtes Verschweißen möglich wird. Im Gegensatz dazu würde beispielsweise bei Verwendung eines Elektroschweißverfahrens eine Ablenkung der dabei verwendeten Elektronen durch das Magnetfeld der Magnetanordnung auftreten und dadurch nicht sichergestellt sein können, dass die Schweißverbindung fluiddicht ausgestaltet werden kann.

In einer Ausführungsform umfasst die Abdeckung ein Metallblech. Eine Metallblechdicke beträgt zwischen 0,05 und 0,5 mm. Bevorzugt beträgt die Metallblechdicke zwischen 0,09 und 0,11 mm und insbesondere 0,1 mm. Diese Metallblechdicken eignen sich gut zum Laserschweißen, sodass metallische Abdeckungen mit diesen Metallblechdicken gut mit dem Gehäusegrundkörper verschweißt werden können. Besonders vorteilhaft ist diese Metallblechdicke bei der Verwendung von Edelstahl als Material für die Abdeckung. Der Gehäusegrundkörper kann ebenfalls aus Edelstahl gefertigt sein. Ferner können der Gehäusegrundkörper und die Abdeckung ebenfalls aus Aluminium oder einer Aluminium-Legierung gefertigt sein. Der Gehäusegrundkörper und die Abdeckung können ferner aus verschiedenen Materialien gefertigt sein, beispielsweise Edelstahl für den Gehäusegrundkörper und Aluminium für die Abdeckung.

In einer Ausführungsform weisen der Gehäusegrundkörper und/oder die Abdeckung einen Kunststoff auf. Die Abdeckung und der Gehäusegrundkörper sind laserverschweißt. Insbesondere kann auch eine Kunststoff-Abdeckung mit einem metallischen Gehäusegrundkörper oder eine metallische Abdeckung mit einem Kunststoff-Grundkörper laserverschweißt werden.

In einer Ausführungsform ist eine Laserschweißverbindung zwischen dem Gehäusegrundkörper und der Abdeckung umlaufend in einem Randbereich des Gehäuses angeordnet. Dies kann bedeuten, dass der Gehäusegrundkörper eine planare Unterseite aufweist, wobei die Ausnehmung, in der die Magnetanordnungen angeordnet sind, von dieser planaren Unterseite ausgeht. Die Abdeckung wird auf die planare Unterseite aufgelegt und anschließend umlaufend mit einer Laserschweißverbindung am Gehäusegrundkörper befestigt.

In einer Ausführungsform ist das Innere des fluiddichten Gehäuses zumindest teilweise evakuiert. Dies kann insbesondere dann vorteilhaft sein, wenn der Läufer innerhalb eines Vakuums eingesetzt werden soll.

In einer Ausführungsform ist eine Evakuierungsvorrichtung am Gehäuse angebracht. Die Evakuierungsvorrichtung umfasst ein verschweißtes oder verlötetes Rohr. Mittels des Rohrs kann beispielsweise innerhalb des Gehäuses ein Unterdruck erzeugt werden und anschließend das Rohr mittels einer Zange oder Presse zugedrückt und an dieser Stelle verschweißt und abgetrennt werden. Dadurch ist ein Evakuieren des Inneren des Gehäuses möglich.

In einer Ausführungsform ist das Innere des fluiddichten Gehäuses zumindest teilweise mit einer Vergussmasse verfüllt. Dies kann beispielsweise dazu dienen, Bereiche innerhalb der Ausnehmung, in der die Magnetanordnung oder die Magnetanordnungen nicht angeordnet sind, zu füllen, bevor die Abdeckung angebracht wird.

In einer Ausführungsform ist das Innere des fluiddichten Gehäuses mit einer PU-Vergussmasse blasenfrei vergossen. PU-Vergussmassen eignen sich besonders gut zum Vergießen des Gehäuses. In einer Ausführungsform ist das Innere des fluiddichten Gehäuses wasserfrei. Dies ermöglicht insbesondere den Einsatz des Läufers in einer sensiblen Umgebung wie beispielsweise einem Reinraum oder einem Vakuum. Ein weiterer Vorteil des wasserfreien Inneren ist, dass der Läufer dann, sofern er in einer aggressiven Umgebung eingesetzt wird, einfach zu reinigen ist, da beispielsweise das Reinigen mittels Wasser und das anschließende Aufheizen des Läufers auf über 100°C zum Trocknen des Läufers gut möglich ist. Wären im Inneren des Läufers Wassermoleküle, so würden diese beim Aufheizen auf über 100°C verdampfen und dadurch gegebenenfalls einen Überdruck innerhalb des Läufers erzeugen. Dies könnte zur Beschädigung der Abdeckung führen.

In einer Ausführungsform kann die Magnetanordnung mit einem Statormagnetfeld wechselwirken und dadurch kann der Läufer angetrieben werden.

Um den Läufer herzustellen, kann zunächst ein Gehäusegrundkörper mit einer Ausnehmung bereitgestellt werden. Der Gehäusegrundkörper kann dabei eine planare Unterseite aufweisen, von der die Ausnehmung ausgeht. Anschließend kann zumindest eine Magnetanordnung in der Ausnehmung angeordnet werden. Selbstverständlich können auch mehrere Magnetanordnungen innerhalb der Ausnehmung angeordnet werden. Anschließend wird eine Abdeckung am Gehäusegrundkörper derart angebracht, dass ein aus dem Gehäusegrundkörper und der Abdeckung gebildetes Gehäuse fluiddicht ausgestaltet ist und die Magnetanordnung in einem Inneren des fluiddichten Gehäuses angeordnet ist. Der Gehäusegrundkörper und die Abdeckung können dabei die weiter oben beschriebenen Eigenschaften aufweisen.

In einer Ausführungsform des Verfahrens sind der Gehäusegrundkörper und die Abdeckung metallisch ausgeführt. Die Abdeckung und der Gehäusegrundkörper werden laserverschweißt.

In einer Ausführungsform des Verfahrens befindet sich der Läufer während des Anbringens der Abdeckung in einem Vakuum. Dadurch wird das Innere des fluiddichten Gehäuses wasserfrei. Ferner kann durch dieses Verfahren gleichzeitig erreicht werden, dass das Innere des Gehäuses evakuiert ist.

In einer Ausführungsform des Verfahrens wird der Läufer vor oder während des Anbringens der Abdeckung auf mehr als 100°C erwärmt. Dadurch wird das Innere des fluiddichten Gehäuses ebenfalls wasserfrei. Insbesondere kann der Läufer vor dem Anbringen der Abdeckeinheit erwärmt und dadurch sämtliches Wasser vom Gehäusegrundkörper und der Magnetanordnung verdampfen. Nachdem nun die Abdeckung aufgelegt wird, kann diese mit dem Gehäusegrundkörper laserverschweißt werden und somit kann der Läufer mit fluiddichtem Gehäuse und wasserfreiem Inneren erzeugt werden.

Ein Planarantriebssystem umfasst zumindest ein Statormodul, wobei das Statormodul zumindest eine Statoreinheit mit zumindest einer Spulenanordnung umfasst. Die Spulenanordnung kann bestromt werden und ist eingerichtet, aufgrund einer Bestromung ein Statormagnetfeld oberhalb einer Statorfläche zu erzeugen. Das Planarantriebssystem weist ferner den Läufer auf. Der Läufer kann mittels einer Wechselwirkung zwischen dem Statormagnetfeld und einem Läufermagnetfeld der Magnetanordnung oberhalb der Statorfläche bewegt werden. Das Planarantriebssystem weist ferner eine Trennvorrichtung auf, wobei die Trennvorrichtung oberhalb der Statorfläche angeordnet ist. Das Statormodul ist auf einer ersten Seite der Trennvorrichtung angeordnet und der Läufer ist auf einer zweiten Seite der Trennvorrichtung angeordnet.

Die Trennvorrichtung ist insbesondere dann vorteilhaft, wenn der Läufer in einer aggressiven Umgebung oder einer sensiblen Umgebung eingesetzt werden soll. Soll der Läufer in einer aggressiven Umgebung eingesetzt werden, kann mittels der Trennvorrichtung die aggressive Umgebung vom Statormodul räumlich getrennt werden und somit eine Beschädigung des Statormoduls vermieden werden. Soll der Läufer in einem sensiblen Bereich eingesetzt werden, kann durch die Trennvorrichtung erreicht werden, dass die Statoreinheit außerhalb des sensiblen Bereichs angeordnet werden kann und etwaiges Ausgasen der Statoreinheit nicht zu einer Kontamination des sensiblen Bereichs führt. Dies ermöglicht insbesondere, den Läufer in einem Reinraum oder einem Vakuum zu verwenden.

Die Trennvorrichtung ist nichtmagnetisch. Dadurch, dass die Trennvorrichtung nichtmagnetisch ist, kann das Statormagnetfeld auf der zweiten Seite mit dem Läufer wechselwirken und wird nicht durch die Trennvorrichtung vollständig abgeschirmt.

Die Trennvorrichtung weist eine relative magnetische Permeabilität kleiner als zehn, insbesondere kleiner als zwei und bevorzugt kleiner als 1,01 auf. Somit ist die Trennvorrichtung diamagnetisch oder paramagnetisch und das Statormagnetfeld kann auf der zweiten Seite mit dem Läufer wechselwirken und wird nicht durch die Trennvorrichtung vollständig abgeschirmt.

In einer Ausführungsform des Planarantriebssystems ist die Trennvorrichtung zwischen 0,5 und 1 mm dick. Dies ermöglicht einerseits eine sichere Abtrennung des Statormoduls vom aggressiven Medium oder dem sensiblen Bereich und ferner, dass das Statormagnetfeld von der Trennvorrichtung nicht vollständig abgeschirmt wird, selbst wenn die Trennvorrichtung nichtmetallisch ist.

Die Trennvorrichtung ist Teil eines Arbeitsgehäuses. Der Läufer kann innerhalb des Arbeitsgehäuses bewegt werden.

Das Arbeitsgehäuse kann beispielsweise einen Flüssigkeitstank umfassen. Der Flüssigkeitstank kann dabei aus der Trennvorrichtung und Seitenwänden bestehen und oben offen sein. Alternativ kann der Flüssigkeitstank auch vollständig geschlossen sein. Dadurch kann erreicht werden, dass das Statormodul außerhalb des Flüssigkeitstanks angeordnet werden kann und somit das Statormodul selbst nicht fluiddicht ausgestaltet werden muss. In diesem Fall kann es vorgesehen sein, das Arbeitsgehäuse fluiddicht auszugestalten.

Das Arbeitsgehäuse kann ferner einen Reinraum abschließen und somit ebenfalls fluiddicht ausgestaltet sein. Auch in diesem Fall kann das Statormodul außerhalb des Reinraums angeordnet sein und somit Kontaminationen, die vom Statormodul ausgehen, im Inneren des Reinraums vermieden werden.

In einer Ausführungsform des Planarantriebssystems umfasst das Arbeitsgehäuse eine erste Vakuumkammer. Der Läufer kann also innerhalb der ersten Vakuumkammer bewegt werden und das Statormodul ist mittels der Trennvorrichtung von der ersten Vakuumkammer abgetrennt. Somit kann ein Ausgasen von Komponenten des Statormoduls eine Vakuumqualität innerhalb der ersten Vakuumkammer nicht beeinträchtigen.

In einer Ausführungsform des Planarantriebssystems ist das Statormodul innerhalb einer zweiten Vakuumkammer angeordnet. Die Trennvorrichtung trennt die erste Vakuumkammer von der zweiten Vakuumkammer ab. Diese Ausgestaltung ist insbesondere deshalb vorteilhaft, da die Trennvorrichtung gegebenenfalls relativ dünn, wie oben beschrieben in einer bevorzugten Ausgestaltung zwischen 0,5 und 1 mm dick, ausgestaltet ist. Würde nur die erste Vakuumkammer vorgesehen sein, so würde der in der ersten Vakuumkammer vorliegende Unterdruck gegebenenfalls dazu führen, dass die Trennvorrichtung in die erste Vakuumkammer kollabiert und dabei beschädigt wird. Wird das Statormodul in der zweiten Vakuumkammer angeordnet und die zweite Vakuumkammer von der ersten Vakuumkammer mittels der Trennvorrichtung abgetrennt, so können sowohl die erste Vakuumkammer als auch die zweite Vakuumkammer evakuiert werden. Die dann auf die Trennvorrichtung wirkenden Kräfte sind signifikant kleiner, sodass einerseits ein Ausgasen von Komponenten des Statormoduls in die erste Vakuumkammer und andererseits eine Beschädigung der Trennvorrichtung vermieden werden können.

In einer Ausführungsform des Planarantriebssystems ist zwischen der ersten Vakuumkammer und der zweiten Vakuumkammer ein Ausgleichsventil angeordnet. Das Ausgleichsventil ist eingerichtet, einen Druckunterschied zwischen der ersten Vakuumkammer und der zweiten Vakuumkammer auszugleichen, wenn der Druckunterschied größer als 5 mbar ist. Die oben beschriebene bevorzugte Materialstärke der Trennvorrichtung ist bis zu einem Druckunterschied von 5 mbar in jedem Fall stabil. Durch das Ausgleichsventil kann ein plötzlich auftretender Druckunterschied ausgeglichen werden und somit eine Beschädigung der Trennvorrichtung vermieden werden.

In einer Ausführungsform des Planarantriebssystems ist das Ausgleichsventil als Überdruckventil ausgestaltet. In einer Ausführungsform des Planarantriebssystems ist das Ausgleichsventil als gesteuertes Ventil ausgestaltet. Eine Ventilsteuerung ist mit einem ersten Drucksensor der ersten Vakuumkammer und mit einem zweiten Drucksensor der zweiten Vakuumkammer verbunden. Mittels des ersten Drucksensors kann der Innendruck der ersten Vakuumkammer gemessen werden. Mittels des zweiten Drucksensors kann der Innendruck der zweiten Vakuumkammer gemessen werden. Unterscheidet sich dieser Innendruck um mehr als 5 mbar, so kann das gesteuerte Ventil geöffnet und dadurch ein Druckausgleich zwischen der ersten Vakuumkammer und der zweiten Vakuumkammer erreicht werden.

In einer Ausführungsform ist das Statormodul mit einer Vakuumdurchführung verbunden. Die Vakuumdurchführung ist eingerichtet, eine Datenverbindung und eine Stromverbindung für das Statormodul von außerhalb der zweiten Vakuumkammer bereitzustellen.

In einer Ausführungsform des Planarantriebssystems umfasst die Vakuumdurchführung eine Leiterplatte. Die Leiterplatte ist Teil einer Wand der zweiten Vakuumkammer. Die Leiterplatte umfasst ferner Pins zur Stromdurchführung und Vias für die Datenverbindung. Hierzu kann die Leiterplatte beispielsweise auf beiden Seiten einen entsprechenden eine Buchse aufweisen, wobei die einzelnen Anschlüsse der jeweiligen Buchsen mittels Vias verbunden sind und innerhalb der zweiten Vakuumkammer ein konventionelles Netzwerkkabel zur Verbindung der Buchse innerhalb der zweiten Vakuumkammer mit dem Statormodul und außerhalb der zweiten Vakuumkammer ein konventionelles Netzwerkkabel zur Verbindung der Buchse mit einer Steuerung verwendet werden. Die Pins zur Stromdurchführung sind dabei dicker ausgestaltet, um die für die Erzeugung des Statormagnetfelds notwendigen Ströme bereitstellen zu können.

In einer Ausführungsform ist eine thermische Verbindung zwischen dem Statormodul und einer Wand der zweiten Vakuumkammer hergestellt, um Abwärme vom Statormodul abzuleiten.

In einer Ausführungsform des Planarantriebssystems kann die erste Vakuumkammer mittels einer Vorpumpe und einer Turbopumpe evakuiert werden. Insbesondere kann vorgesehen sein, dass die Vorpumpe mit der Turbopumpe und mit der zweiten Vakuumkammer verbunden ist und die Turbopumpe mit der ersten Vakuumkammer verbunden ist. Wird nun die Vorpumpe aktiviert, so evakuiert die Vorpumpe sowohl die erste Vakuumkammer als auch die zweite Vakuumkammer. Beträgt der Unterdruck in der ersten Vakuumkammer und der zweiten Vakuumkammer weniger als 5 mbar, kann anschließend die Turbopumpe, die mit der ersten Vakuumkammer verbunden ist, aktiviert werden. Somit kann innerhalb der ersten Vakuumkammer mittels der Turbopumpe ein Ultrahochvakuum erzeugt werden. In der zweiten Vakuumkammer liegt nur das Vakuum der Vorpumpe an. Trotz des dadurch gegebenen Druckunterschieds ist die Trennvorrichtung stabil genug, um diesen Druckunterschied auszuhalten und es wird somit ein effizientes System für ein Planarantriebssystem mit im Vakuum zu betreibenden Läufern bereitgestellt.

Die Erfindung wird anhand der beigefügten Figuren näher erläutert. Hierbei zeigen:
- Fig. 1: eine isometrische Ansicht eines Läufers;
- Fig. 2: eine Ansicht von unten auf den Läufer der Fig. 1 vor Anbringung einer Abdeckung;
- Fig. 3: den Läufer der Fig. 1 und 2, nachdem die Abdeckung angebracht wurde;
- Fig. 4: einen Querschnitt durch den Läufer der Fig. 1 bis 3;
- Fig. 5: eine vergrößerte Darstellung eines Laserschweißbereichs des Läufers der Fig. 1 bis 4;
- Fig. 6: einen Querschnitt durch einen weiteren Läufer;
- Fig. 7: eine isometrische Ansicht eines weiteren Läufers;
- Fig. 8: einen Querschnitt durch den Läufer der Fig. 7;
- Fig. 9: einen Querschnitt durch einen weiteren Läufer;
- Fig. 10: einen Querschnitt durch einen weiteren Läufer;
- Fig. 11: ein Planarantriebssystem;
- Fig. 12: ein weiteres Planarantriebssystem;
- Fig. 13: ein weiteres Planarantriebssystem;
- Fig. 14: ein weiteres Planarantriebssystem;
- Fig. 15: eine Vakuumdurchführung für ein Planarantriebssystem;
- Fig. 16: einen Querschnitt durch eine Schleusenkammer für ein Planarantriebssystem;
- Fig. 17: ein weiteres Planarantriebssystem;
- Fig. 18: ein weiteres Planarantriebssystem;
- Fig. 19: das Planarantriebssystem der Fig. 18 in einer Draufsicht;
- Fig. 20: ein weiteres Planarantriebssystem;
- Fig. 21: ein weiteres Planarantriebssystem;
- Fig. 22: ein weiteres Planarantriebssystem;
- Fig. 23: ein weiteres Planarantriebssystem;
- Fig. 24: das Planarantriebssystem der Fig. 23 in einer Draufsicht; und
- Fig. 25: ein weiteres Planarantriebssystem.

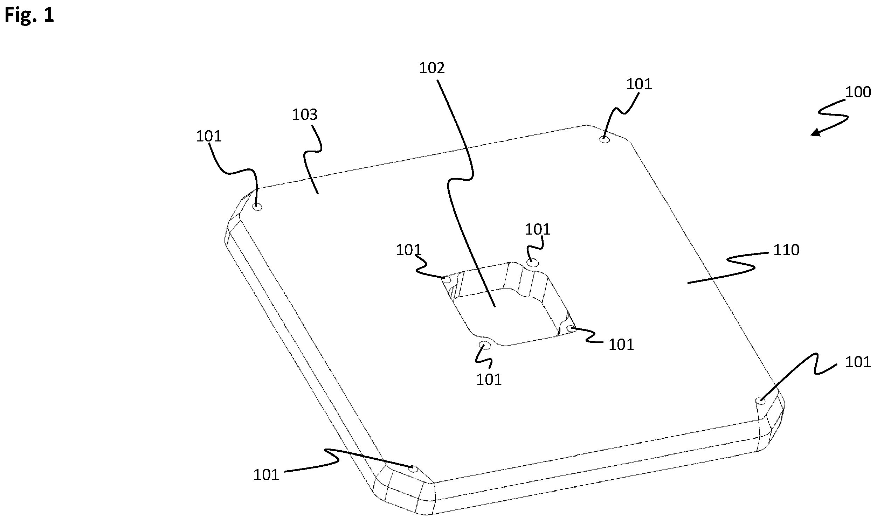

Fig. 1 zeigt eine isometrische Ansicht eines Läufers 100 mit einem Gehäuse 110. Das Gehäuse 110 weist Befestigungsvorrichtungen 101 auf, an denen eine Nutzlast des Läufers 100 befestigt werden kann. Die Befestigungsvorrichtungen 101 können dazu Sacklöcher oder Gewindelöcher umfassen, um die Nutzlast am Läufer 100 zu arretieren oder mit dem Läufer zu verschrauben. In der Mitte des Gehäuses 110 weist dieses ferner ein Durchgangsloch 102 auf. Der Läufer 100 ist in Fig. 1 derart dargestellt, dass eine Oberseite 103 des Läufers zu sehen ist und eine der Oberseite 103 gegenüberliegende Unterseite des Läufers 100 nicht zu sehen ist. Alternativ zur Darstellung der Fig. 1 ist es auch möglich, den Läufer 100 ohne das Durchgangsloch 102 auszugestalten. Ferner können die Befestigungsvorrichtungen 101 auch anders angeordnet sein oder komplett weggelassen werden.

Der Läufer 100 ist eingerichtet, in einem Planarantriebssystem betrieben zu werden. Das Planarantriebssystem kann dabei Statormodule umfassen, die jeweils ein Statormagnetfeld erzeugen können und mit im Läufer 100 angeordneten Magnetanordnungen wechselwirken können. Dadurch kann der Läufer 100 als Teil eines Planarantriebs bewegt werden.

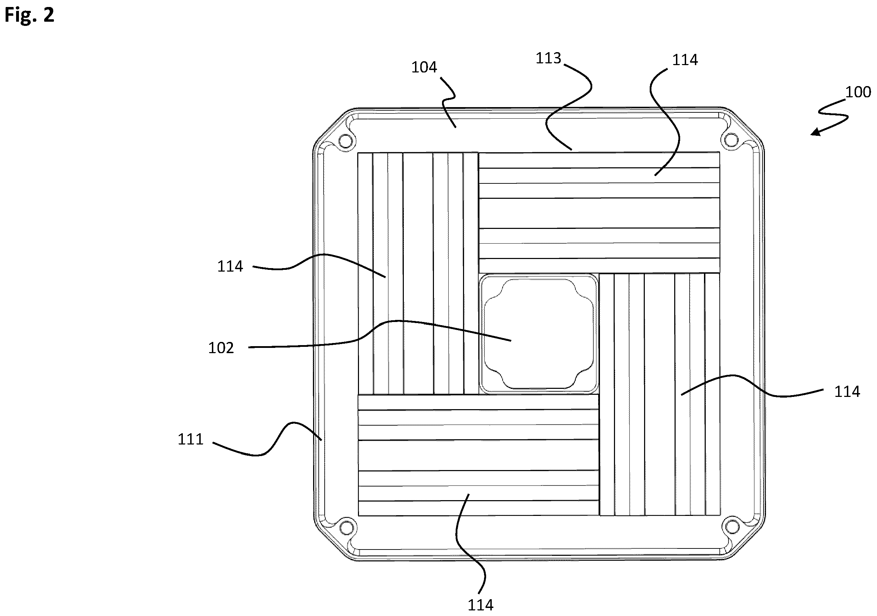

Fig. 2 zeigt eine Ansicht auf eine Unterseite 104 des Läufers 100 der Fig. 1. Der Läufer 100 weist einen Gehäusegrundkörper 111 auf. Ausgehend von der Unterseite 104 weist der Gehäusegrundkörper 111 eine Ausnehmung 113 auf, in der vier Magnetanordnungen 114 angeordnet sind. Die Magnetanordnungen 114 sind dabei als sogenannte Halbach-Arrays mit insgesamt fünf unterschiedlich magnetisierten Bereichen ausgestaltet. Die vier Magnetanordnungen 114 sind umlaufend um die Ausnehmung 102 angeordnet. Die Anordnung der Magnetanordnungen 114 kann auch anders ausgestaltet sein als in Fig. 2 gezeigt. Insbesondere kann die Anzahl der Magnetanordnungen 114 auch anders als vier sein und insbesondere nur eine Magnetanordnung 114 vorgesehen sein. Ferner können die Magnetanordnungen 114 in ihren geometrischen Abmessungen variieren. Mit der Veränderung der Größe der Magnetanordnungen 114 kann die Größe des Läufers 100 variiert werden.

Soll der Läufer 100, wie er in den Fig. 1 und 2 gezeigt ist, in einem aggressiven Medium oder in einem sensiblen Bereich eingesetzt werden, kann es vorkommen, dass ein aggressives Medium die Magnetanordnungen 114 oder einen in Fig. 2 nicht dargestellten Kleber, mit dem die Magnetanordnungen 114 innerhalb der Ausnehmung 113 festgeklebt sind, angreift. Ferner kann es vorkommen, dass wenn der Läufer 100 in einem sensiblen Bereich bewegt werden soll, die Magnetanordnungen 114 oder der Kleber, mit dem die Magnetanordnungen 114 befestigt sind, ausgasen und dabei den sensiblen Bereich kontaminieren. Der sensible Bereich kann dabei ein Reinraum oder ein Vakuum sein. Um dieses Problem zu lösen, ist der Läufer 100 mit einer Abdeckung fluiddicht verschlossen.

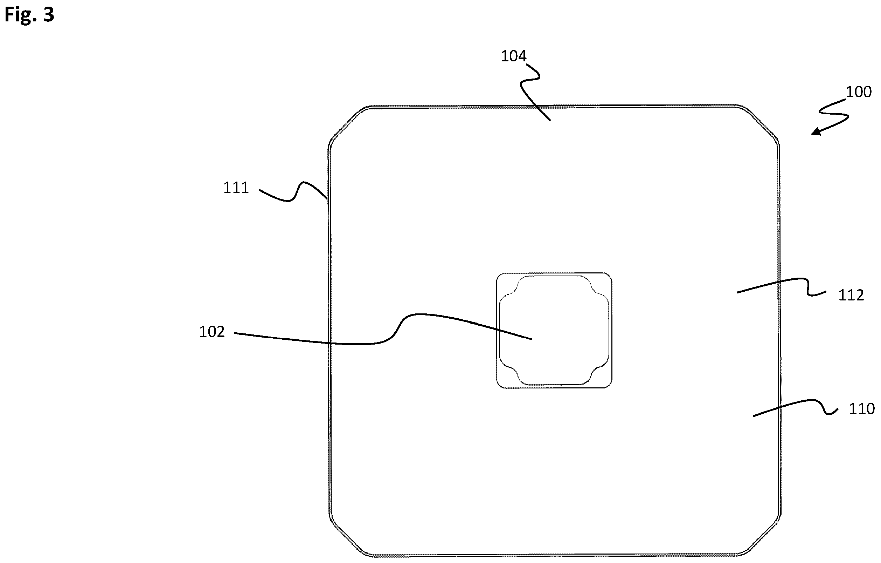

Fig. 3 zeigt eine Ansicht der Unterseite 104, nachdem eine Abdeckung 112 angebracht wurde. Mittels der Abdeckung 112, die ebenso wie der Gehäusegrundkörper 111 Teil des Gehäuses 110 ist, wird der Läufer 100 fluiddicht verschlossen. Somit ist das Gehäuse 110 fluiddicht ausgestaltet.

Der Läufer 100 für ein Planarantriebssystem weist also ein Gehäuse 110 und zumindest eine Magnetanordnung 114 auf. Das Gehäuse 110 weist einen Gehäusegrundkörper 111 und eine Abdeckung 112 auf. Die Magnetanordnung 114 ist in einer Ausnehmung 113 des Gehäusegrundkörpers 111 angeordnet. Die Abdeckung 112 ist derart am Gehäusegrundkörper 114 angebracht, dass das Gehäuse 110 fluiddicht ausgestaltet ist, die Abdeckung 112 die Ausnehmung 113 abdeckt und die Magnetanordnung 114 in einem Inneren des fluiddichten Gehäuses 110 angeordnet ist.

Die Abdeckung 112 ist derart ausgestaltet, dass ein Magnetfeld der Magnetanordnung 114 außerhalb des Gehäuses 110 vorhanden ist. Dies bedeutet, dass ein Magnetfeld der Magnetanordnungen 114 auch außerhalb des Läufers 100 zum Antreiben des Läufers 100 innerhalb eines Planarantriebssystems zur Verfügung steht und das Magnetfeld der Magnetanordnung 114 nicht von der Abdeckung 112 vollständig abgeschirmt wird.

Dadurch, dass das Gehäuse 110 mittels der Abdeckung 112 fluiddicht ausgestaltet ist, kann bei Einsatz des Läufers 100 in einer aggressiven Umgebung erreicht werden, dass eine Flüssigkeit wie beispielsweise Wasser, eine Säure, eine Lauge oder ein organisches Lösungsmittel die Magnetanordnung 114 oder den Kleber, mit dem die Magnetanordnung 114 innerhalb des Läufers 100 befestigt ist, nicht mehr angreifen kann. Wird der Läufer 100 in einem sensiblen Bereich verwendet, beispielsweise einem Reinraum oder einem Vakuum, so kann erreicht werden, dass weder die Magnetanordnung 114 noch der zum Befestigen der Magnetanordnung 114 verwendete Kleber eine Kontamination verursachen können.

Die Abdeckung 112 ist nichtmagnetisch. Ferner kann die Abdeckung 112 paramagnetisch oder diamagnetisch sein und weist eine relative magnetische Permeabilität kleiner als zehn, insbesondere kleiner als zwei und bevorzugt kleiner als 1,01 auf.

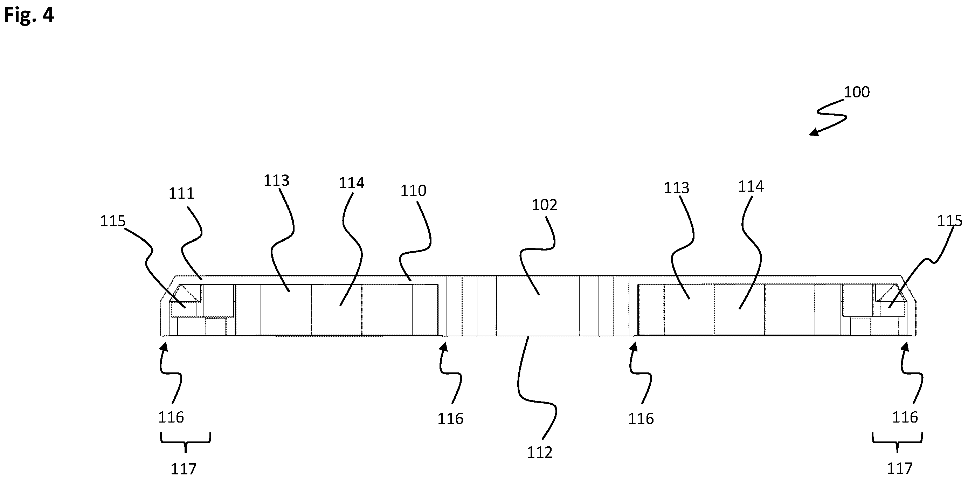

Fig. 4 zeigt einen Querschnitt durch den Läufer 100 der Fig. 1 bis 3, nachdem die Abdeckung 112 am Gehäusegrundkörper 111 befestigt wurde. Ein Inneres 115 des Gehäuses 110 ist mittels der Abdeckung 112 fluiddicht abgeschlossen. Die Magnetanordnungen 114 sind im Inneren 115 des Gehäuses 110 angeordnet.

In einem Ausführungsbeispiel schwächt die Abdeckung 112 ein Magnetfeld der Magnetanordnung 114 außerhalb des Gehäuses 110 um maximal 25% ab. Insbesondere schwächt die Abdeckung 112 das Magnetfeld der Magnetanordnung 114 maximal um 10% ab. Besonders bevorzugt ist eine Abdeckung 112, die das Magnetfeld der Magnetanordnung 114 im Wesentlichen überhaupt nicht, also um maximal 1% abschwächt. Ein solcher Läufer 100 kann für ein Planarantriebssystem 1 gut eingesetzt werden.

In einem Ausführungsbeispiel sind der Gehäusegrundkörper 111 und die Abdeckung 112 metallisch ausgeführt. Die Abdeckung 112 und der Gehäusegrundkörper 111 sind dabei laserverschweißt. Der Gehäusegrundkörper 111 und die Abdeckung 112 können dabei beispielsweise aus Edelstahl gefertigt sein.

In einem Ausführungsbeispiel ist eine Laserschweißverbindung 116 zwischen dem Gehäusegrundkörper 111 und der Abdeckung 112 umlaufend in einem Randbereich 117 des Gehäuses 111 angeordnet. Diese Laserschweißverbindung 116 kann das ganze Gehäuse 110 des Läufers 100 umlaufen. Ferner ist in Fig. 4 ebenfalls dargestellt, dass im Bereich des Durchgangslochs 102 ebenfalls eine Laserschweißverbindung 116 ausgeführt ist, um die Abdeckung 112 auch im Bereich des Durchgangslochs 102 mit dem Gehäusegrundkörper 111 zu verbinden.

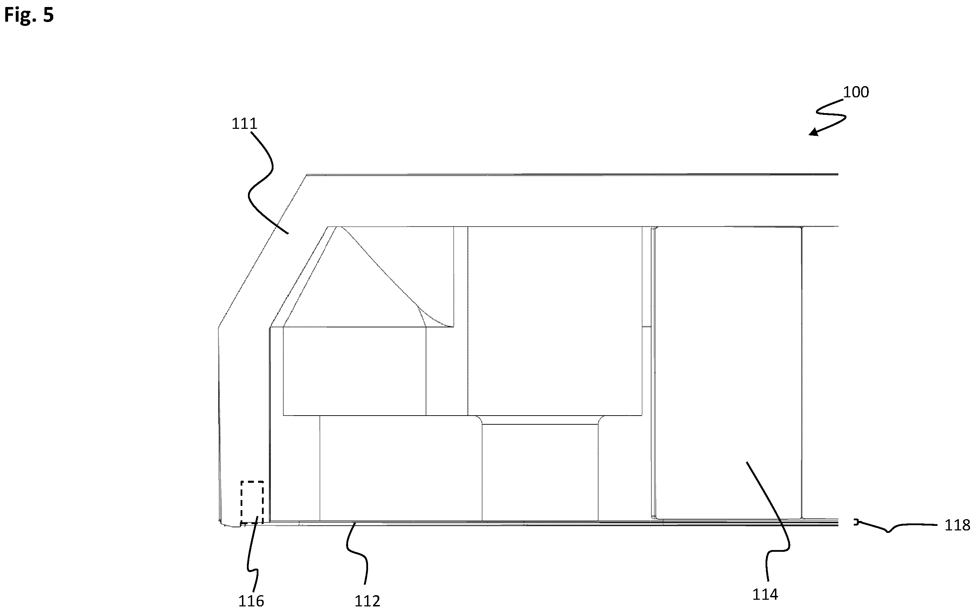

Fig. 5 zeigt eine vergrößerte Darstellung der Laserschweißverbindung 116. Die Abdeckung 112 ist mit dem Gehäusegrundkörper 111 laserverschweißt. Dies geschieht dadurch, dass ein Laser auf die Abdeckung 112 gerichtet wird und dabei innerhalb der Abdeckung 112 und des Gehäusegrundkörpers 111 eine Aufschmelzzone erzeugt. Im Bereich der Laserschweißverbindung 116, die in Fig. 5 gestrichelt dargestellt ist, ist eine Mischung des Materials des Gehäusegrundkörpers 111 und der Abdeckung 112 angeordnet, wobei die Mischung dadurch entsteht, dass der Laser das Material des Gehäusegrundkörpers 111 und der Abdeckung 112 aufschmilzt und die Schmelze nach Abschalten des Lasers wieder erstarrt und dabei eine fluiddichte Verbindung zwischen Gehäusegrundkörper 111 und Abdeckung 112 ausbildet. Die Abdeckung 112 mittels Laserschweißverfahren am Gehäusegrundkörper 111 anzubringen, ist technisch vorteilhaft, da ein Magnetfeld der Magnetanordnung 114 auf die Laserstrahlung keinen Einfluss hat. Würde eine Elektroschweißverbindung ausgebildet werden, so würden die dabei verwendeten Elektronen durch das Magnetfeld der Magnetanordnung 114 entsprechend abgelenkt werden und dadurch nicht zuverlässig ein fluiddichtes Gehäuse 110 erzeugt werden können.

In einer Ausführungsform umfasst die Abdeckung 112 ein Metallblech. Eine Metallblechdicke 118, also eine Dicke des Metallblechs der Abdeckung 112 ist zwischen 0,05 und 0,5 mm. Bevorzugt beträgt die Metallblechdicke 118 zwischen 0,09 und 0,11 mm und insbesondere 0,1 mm.

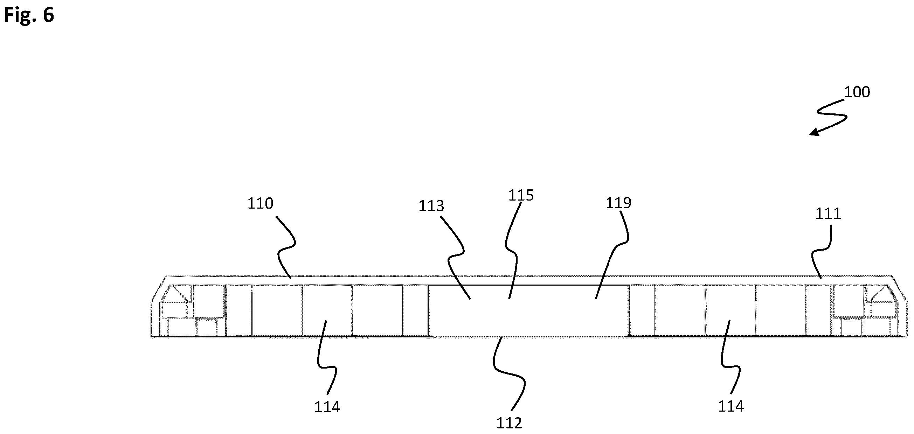

Fig. 6 zeigt einen Querschnitt durch einen weiteren Läufer 100, der im Wesentlichen ausgestaltet ist, wie der in den Fig. 1 bis 5 beschriebene Läufer. Lediglich das Durchgangsloch 102 ist nicht vorgesehen, wobei die Ausnehmung 113 über den gesamten Gehäusegrundkörper 111 geführt ist und die Magneteinheiten 114 in der Ausnehmung 113 angeordnet sind. Zwischen den Magneteinheiten 114 ist ein Inneres 115 des Gehäuses 110 angeordnet, welches mittels der Abdeckung 112 fluiddicht von einer Umgebung des Läufers 100 abgetrennt ist. Um einen solchen Läufer 100, wie in Fig. 6 dargestellt, zu verwenden, kann es vorteilhaft sein, das Innere 115 des Läufers entweder zumindest teilweise zu evakuieren, insbesondere dann, wenn der Läufer 100 in einem Vakuum eingesetzt werden soll, oder es kann vorgesehen sein, eine Vergussmasse 119 im Inneren 115 des Gehäuses 110 anzuordnen und somit Hohlräume innerhalb des Gehäuses 110 zu vermeiden. In einem Ausführungsbeispiel ist die Vergussmasse 119 eine PU-Vergussmasse, wobei das Innere 115 des fluiddichten Gehäuses 110 mit der PU-Vergussmasse blasenfrei vergossen ist. Durch das Vergießen mit der Vergussmasse 119 kann beispielsweise erreicht werden, dass, wenn der Läufer 100 in einem Vakuum eingesetzt werden soll, keine mit Luft gefüllten Hohlräume innerhalb des Läufers 100 vorliegen und somit bei einer Evakuierung der Umgebung des Läufers 100 kein Überdruck innerhalb des Läufers 100 entsteht, der gegebenenfalls zu einem Bersten der Abdeckung 112 führen könnte. Mit der Vergussmasse 119 können insbesondere weitere Hohlräume des Gehäusegrundkörpers 110, beispielsweise angrenzend an die Magnetanordnungen 114 verschlossen werden.

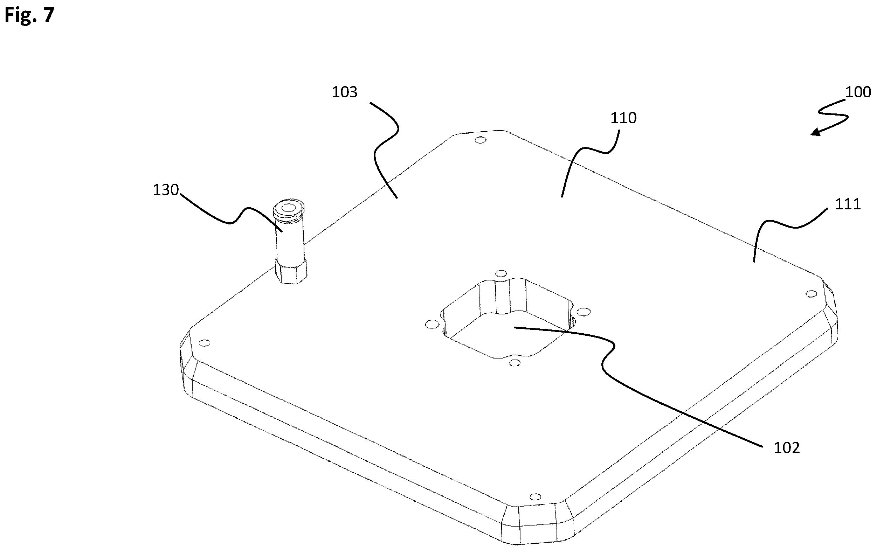

Fig. 7 zeigt eine isometrische Ansicht eines weiteren Läufers 100, wobei der Läufer 100 der Fig. 7 dem Läufer 100 der Fig. 1 entspricht, sofern im Folgenden keine Unterschiede beschrieben sind. Der Läufer 100 weist ein fluiddichtes Gehäuse 110 auf, das wie in den Fig. 1 bis 5 erläutert ausgestaltet sein kann. Ferner kann, wie in Fig. 6 gezeigt, das Durchgangsloch 102 weggelassen werden. Der Läufer 100 weist ferner eine Evakuierungsvorrichtung 130 auf, die am Gehäuse 110 angebracht ist. Mittels der Evakuierungsvorrichtung 130 kann innerhalb des Gehäuses 110 ein Unterdruck erzeugt werden. Das fluiddichte Gehäuse 110 kann also zumindest teilweise, insbesondere vollständig, evakuiert werden. Die Evakuierungsvorrichtung 130 kann dabei ein verschweißtes oder verlötetes Rohr umfassen oder in Form eines Ventils ausgestaltet sein. Insbesondere kann an der Evakuierungsvorrichtung 130 eine Pumpe angeschlossen werden, um das Innere 115 des Gehäuses 110 zumindest teilweise zu evakuieren. Das Evakuieren des Inneren 115 des Gehäuses 110 ist insbesondere sowohl für Läufer 100, die mit einer Vergussmasse 119 vergossen sind, als auch für Läufer 100 ohne Vergussmasse 119 möglich.

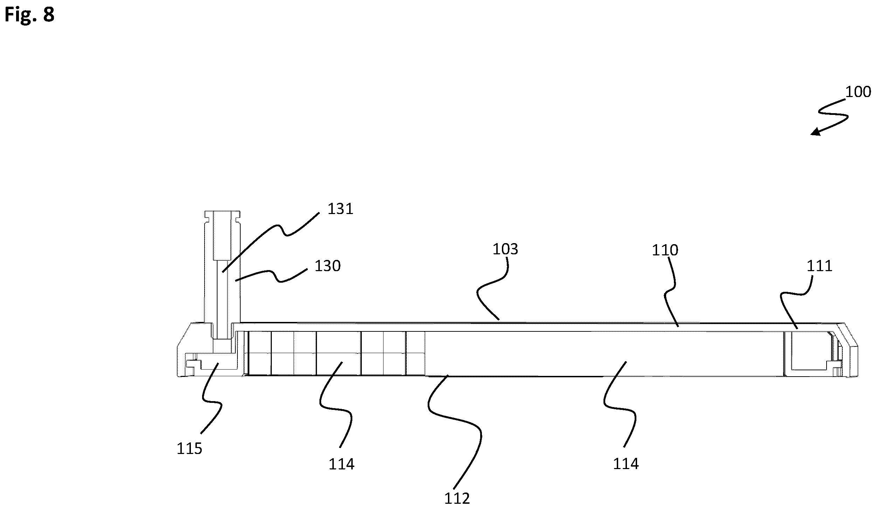

Fig. 8 zeigt einen Querschnitt durch den Läufer 100 der Fig. 7. Die Evakuierungsvorrichtung 130 umfasst ein Rohr 131, welches bis zum Inneren 115 des Gehäuses 110 geführt ist. Mittels des Rohrs 131 kann das Innere 115 des Gehäuses 110 evakuiert werden. Nach dem Evakuieren kann das Rohr 131 verlötet oder verschweißt werden, sodass ein Unterdruck innerhalb des Gehäuses 110 dauerhaft vorhanden ist.

Die Evakuierungsvorrichtung 130 des Ausführungsbeispiels der Fig. 7 und 8 ist dabei an der Oberseite 103 des Läufers angeordnet, wobei alternativ auch andere Positionen zur Anordnung der Evakuierungsvorrichtung 130 vorgesehen sein können.

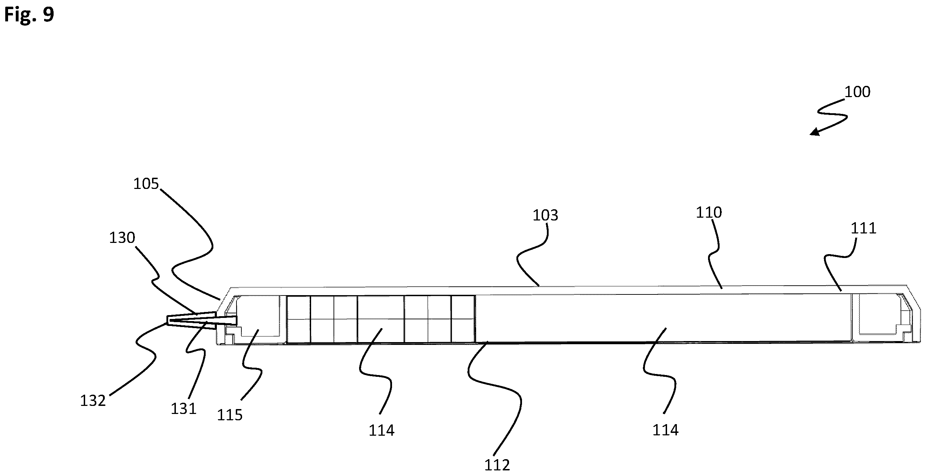

Fig. 9 zeigt einen Querschnitt durch ein weiteres Ausführungsbeispiel eines Läufers 100, der dem Läufer der Fig. 7 und 8 entspricht, sofern im Folgenden keine Unterschiede beschrieben sind. In diesem Ausführungsbeispiel ist die Evakuierungsvorrichtung 130, die wieder als Rohr 131 ausgestaltet ist, an einer Seitenfläche 105 des Läufers 100 angeordnet. Ein verlöteter Bereich 132 ist ausgebildet, um das Rohr 131 nach dem Evakuieren zu verschließen. Analog kann auch ein verschweißter Bereich ausgebildet werden.

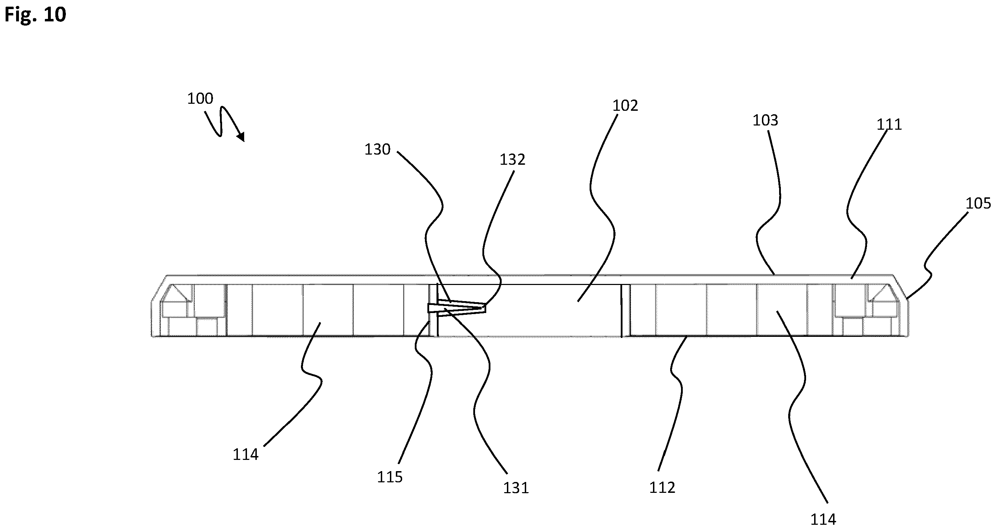

Fig. 10 zeigt einen Querschnitt durch ein weiteres Ausführungsbeispiel eines Läufers 100, der dem Läufer der Fig. 9 entspricht, sofern im Folgenden keine Unterschiede beschrieben sind. In diesem Ausführungsbeispiel weist der Läufer das Durchgangsloch 102 auf und die Evakuierungsvorrichtung 130, die wieder als Rohr 131 ausgestaltet ist, ist im Durchgangsloch 102 des Läufers 100 angeordnet. Ein verlöteter Bereich 132 ist ausgebildet, um das Rohr 131 nach dem Evakuieren zu verschließen. Analog kann auch ein verschweißter Bereich ausgebildet werden.

In einem Ausführungsbeispiel ist vorgesehen, dass das Innere 115 des fluiddichten Gehäuses 110 wasserfrei ist. Dadurch kann der Läufer 100, nachdem er in einer aggressiven Umgebung verwendet wurde, mittels Wasser gereinigt werden und nach dem Reinigen mittels Wasser zum Trocknen auf über 100°C aufgeheizt werden, ohne dass im Inneren 115 des Gehäuses 110 Wassermoleküle vorhanden sind, die bei einer solchen Aufheizung in den gasförmigen Zustand übergehen würden und somit gegebenenfalls zu einem Bersten der Abdeckung 112 führen würden.

Um den in den Fig. 1 bis 10 beschriebenen Läufer herzustellen, kann das im Folgenden beschriebene Verfahren verwendet werden. Zunächst wird der Gehäusegrundkörper 111 mit der Ausnehmung 113 bereitgestellt. Anschließend wird die Magnetanordnung in der Ausnehmung 113 angeordnet. Es können auch mehrere Magnetanordnungen 114, wie in den Fig. 1 bis 10 gezeigt, angeordnet werden. Um die Magnetanordnungen 114 innerhalb der Ausnehmung 113 des Gehäusegrundkörpers 111 zu befestigen, kann Kleber zum Einsatz kommen. Anschließend wird die Abdeckung 112 derart am Gehäusegrundkörper 111 angebracht, dass ein aus dem Gehäusegrundkörper 111 und der Abdeckung 112 bestehendes Gehäuse 110 fluiddicht ausgestaltet ist und die Magnetanordnung 114 in einem Inneren 115 des fluiddichten Gehäuses angeordnet ist.

In einem Ausführungsbeispiel des Verfahrens sind der Gehäusegrundkörper 111 und die Abdeckung 112 metallisch ausgeführt. Die Abdeckung 112 und der Gehäusegrundkörper 111 werden laserverschweißt.

Um das Innere 115 des Gehäuses 110 wasserfrei bereitstellen zu können, kann vorgesehen sein, dass sich der Läufer 100 während des Anbringens der Abdeckung 112 in einem Vakuum befindet und somit das Innere des fluiddichten Gehäuses wasserfrei ist. Ferner kann diese Methodik auch verwendet werden, um gleichzeitig das Innere 115 des Gehäuses 110 zu evakuieren. Eine weitere Alternative zum Herstellen des wasserfreien Inneren 115 des Gehäuses 110 ist es, den Läufer 100 vor und/oder während des Anbringens der Abdeckung 112 auf mehr als 100°C zu erwärmen und somit sämtliches Wasser vom Gehäusegrundkörper 111 und der Magnetanordnung 114 zu verdampfen. Diese beiden Varianten können selbstverständlich auch kombiniert werden, also beispielsweise der Läufer zunächst auf mehr als 100°C erwärmt und gleichzeitig in einem Vakuum angeordnet werden, und anschließend das Laserverschweißen innerhalb des Vakuums bei einer Temperatur über oder unter 100°C erfolgen.

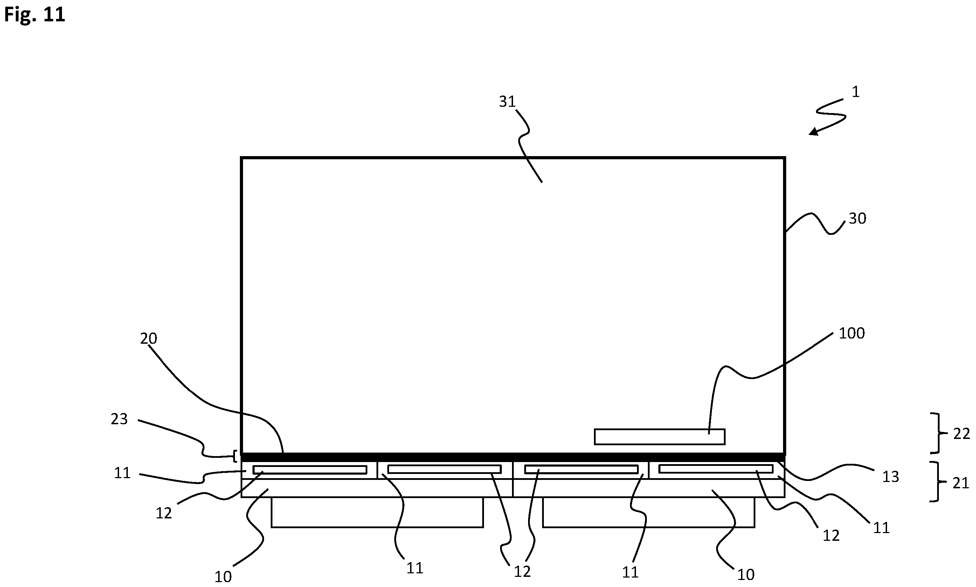

Fig. 11 zeigt einen Querschnitt durch ein Planarantriebssystem 1 mit zwei Statormodulen 10, die jeweils zwei Statoreinheiten 11 aufweisen. Jede Statoreinheit 11 weist zumindest eine Spulenanordnung 12 auf. Die Spulenanordnungen können jeweils bestromt werden und sind eingerichtet, aufgrund einer Bestromung ein Statormagnetfeld oberhalb einer Statorfläche 13 zu erzeugen. Das Planarantriebssystem 1 weist ferner einen Läufer 100 auf, der wie im Zusammenhang mit den Fig. 1 bis 10 beschrieben ausgestaltet ist.

Der Läufer 100 kann mittels einer Wechselwirkung zwischen dem Statormagnetfeld und einem Läufermagnetfeld der Magnetanordnungen 114 oberhalb der Statorfläche 113 bewegt werden. Das Planarantriebssystem weist ferner eine Trennvorrichtung 20 auf. Die Trennvorrichtung 20 ist oberhalb der Statorfläche 13 angeordnet, wobei die Statormodule 10 auf einer ersten Seite 21 der Trennvorrichtung 20 angeordnet sind. Der Läufer 100 ist auf einer zweiten Seite 22 der Trennvorrichtung 20 angeordnet. Die Trennvorrichtung 20 ist nichtmagnetisch ausgestaltet. Die Trennvorrichtung 20 weist ferner eine relative magnetische Permeabilität kleiner als zehn, insbesondere kleiner als zwei und bevorzugt kleiner als 1,01 auf und ist somit diamagnetisch oder paramagnetisch.

In Fig. 11 sind zwei Statormodule 10 gezeigt. Selbstverständlich kann auch eine andere Anzahl von Statormodulen 10, beispielsweise ein Statormodul 10 oder mehr als zwei Statormodule 10, vorgesehen sein. Es ist ferner nur ein Läufer 100 dargestellt, es können jedoch auch mehrere Läufer 100 vorgesehen sein. Es sind also die Statormodule 10 und der Läufer 100 auf verschiedenen Seiten 21, 22 der Trennvorrichtung 20 angeordnet, sodass die Trennvorrichtung 20 den Läufer 100 von den Statormodulen 10 trennt. Das Statormagnetfeld der Statormodule 10 kann durch die Trennvorrichtung 100 gelangen und somit mit dem Läufermagnetfeld der Magnetanordnungen 114 des Läufers 100 wechselwirken und somit den Läufer 100 entsprechend antreiben, insbesondere da die Trennvorrichtung 20 nichtmagnetisch, diamagnetisch oder paramagnetisch ist. In einem Ausführungsbeispiel ist eine Dicke 23 der Trennvorrichtung 20 zwischen 0,5 und 1 mm. Die Trennvorrichtung 20 kann beispielsweise aus Kunststoff, Glas oder metallisch ausgestaltet sein. Insbesondere kann die Trennvorrichtung 20, wenn sie metallisch ausgestaltet ist, aus Edelstahl bestehen.

Ebenfalls in Fig. 11 dargestellt ist, dass die Trennvorrichtung 20 Teil eines Arbeitsgehäuses 30 ist. Das Arbeitsgehäuse 30 weist einen Innenbereich 31 auf, in dem der Läufer 100 bewegt werden kann. Insbesondere kann das Arbeitsgehäuse 30 einen Flüssigkeitstank umfassen, wobei im Innenbereich 31 des Arbeitsgehäuses 30 dann beispielsweise eine aggressive Flüssigkeit auf Wasser basierend, also beispielsweise eine Säure oder Lauge angeordnet sein kann und durch das fluiddichte Gehäuse 110 des Läufers 100, wie weiter oben beschrieben, diese aggressive Flüssigkeit nicht ins Innere des Läufers 100 gelangen kann. Im Innenbereich 31 des Arbeitsgehäuses 30 kann auch ein organisches Lösungsmittel angeordnet sein. Das Arbeitsgehäuse 30 kann dazu vollständig geschlossen oder auch oben offen sein.

Ferner kann das Arbeitsgehäuse 100 einen Reinraumbereich umfassen und so der Innenbereich 31 des Arbeitsgehäuses 30 mit einer vorgegebenen, reinen Umgebung ausgestaltet sein. Durch die Trennvorrichtung 20 sind die Statormodule 10 vom Innenbereich 31 des Arbeitsgehäuses 30 getrennt und Kontaminationen von den Statormodulen 10 können nicht in den Innenbereich 31 des Arbeitsgehäuses 30 gelangen. Somit ist die Bewegung des Läufers 100 in einem Reinraum möglich.

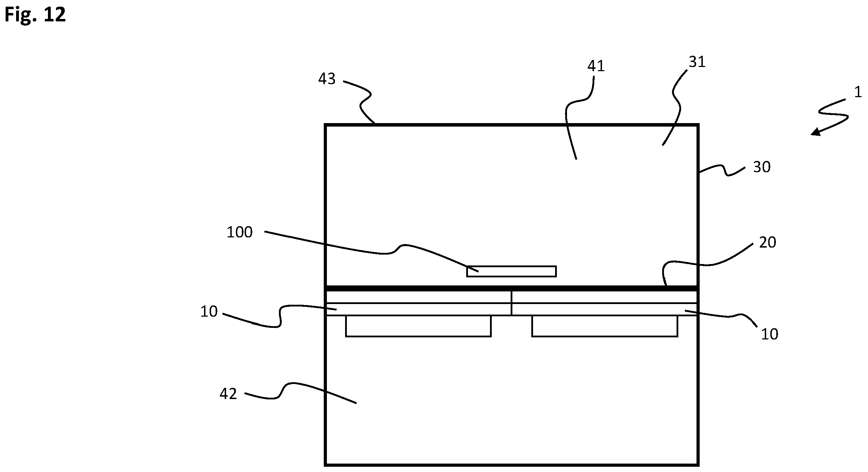

Fig. 12 zeigt einen Querschnitt durch ein weiteres Planarantriebssystem 1, das aufgebaut ist wie das Planarantriebssystem 1 der Fig. 11, sofern im Folgenden keine Unterschiede beschrieben sind. Das Arbeitsgehäuse 30 umfasst eine erste Vakuumkammer 41. Der Läufer 100 kann also innerhalb der ersten Vakuumkammer 41 bewegt werden. Die Statormodule 10 sind außerhalb der ersten Vakuumkammer 41 angeordnet.

Optional, aber ebenfalls in Fig. 12 dargestellt, ist, dass die Statormodule 10 innerhalb einer zweiten Vakuumkammer 42 angeordnet sind. Die Trennvorrichtung 20 trennt die erste Vakuumkammer 41 von der zweiten Vakuumkammer 42 ab. Eine Kammerwand 43 umfasst sowohl die erste Vakuumkammer 41 als auch die zweite Vakuumkammer 42. Durch diesen Aufbau ist es möglich, die Trennvorrichtung 20 dünn auszugestalten, also beispielsweise im Bereich zwischen 0,5 und 1 mm dick. Würde nur die erste Vakuumkammer 41 vorgesehen sein, könnte die Trennvorrichtung 20 aufgrund der geringen Dicke gegebenenfalls in die erste Vakuumkammer 41 hinein kollabieren. Dadurch, dass die Statormodule 20 in der zweiten Vakuumkammer 42 angeordnet sind, kann dies vermieden werden.

Diese Anordnung des Planarantriebssystems 1 innerhalb der ersten Vakuumkammer 41 und der zweiten Vakuumkammer 42 ermöglicht also, den Läufer 100 innerhalb eines Vakuums in der ersten Vakuumkammer 41 zu bewegen. Dies kann insbesondere dann vorteilhaft sein, wenn das Planarantriebssystem 1 eingesetzt werden soll, um Substrate im Vakuum zu bewegen, beispielsweise während der Halbleiterherstellung. Durch die Anordnung der Trennvorrichtung 20 zwischen der ersten Vakuumkammer 41 und der zweiten Vakuumkammer 42 kann ferner erreicht werden, dass die Trennvorrichtung 20 eine geringere Dicke aufweist als die Kammerwand 43, ohne dass die Gefahr besteht, dass die Trennvorrichtung 20 in die erste Vakuumkammer 41 kollabiert.

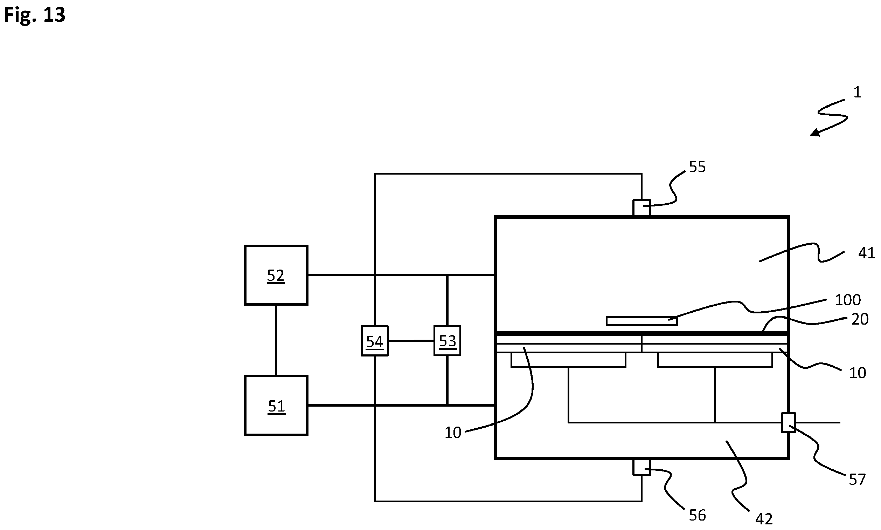

Fig. 13 zeigt ein Planarantriebssystem 1, das dem Planarantriebssystem 1 der Fig. 12 entspricht, dieses jedoch um weitere Komponenten erweitert. Eine Vorpumpe 51 ist mit einer Turbopumpe 52 verbunden. Die Vorpumpe 51 ist ferner mit der zweiten Vakuumkammer 42 verbunden. Die Turbopumpe 52 ist mit der ersten Vakuumkammer 41 verbunden. Soll nun innerhalb der ersten Vakuumkammer 41 und der zweiten Vakuumkammer 42 ein Vakuum bereitgestellt werden, so kann zunächst die Vorpumpe 51 in Betrieb genommen werden. Dadurch wird die erste Vakuumkammer 41 über die Turbopumpe 52 und die zweite Vakuumkammer 42 direkt evakuiert. Ist der Druck innerhalb der ersten Vakuumkammer 41 genügend klein, so kann zusätzlich die Turbopumpe 52 in Betrieb genommen werden, um innerhalb der ersten Vakuumkammer 41 ein Ultrahochvakuum zu erzeugen. Die zweite Vakuumkammer 42 muss gegebenenfalls nicht mittels Turbopumpe evakuiert werden, da das Vakuum in der zweiten Vakuumkammer 42 nur dazu dient, ein Kollabieren der Trennvorrichtung 20 zu verhindern. Somit reichen die durch die Vorpumpe 51 erreichbaren Unterdrücke innerhalb der zweiten Vakuumkammer 42 aus. Anstelle der Vorpumpe 51 und der Turbopumpe 52 kann auch generell ein anderes System verwendet werden, bei dem mittels einer Vakuumpumpe beide Vakuumkammern 41, 42 und mittels einer Hochvakuum- beziehungsweise Ultrahochvakuumpumpe die erste Vakuumkammer 41 evakuiert wird. Ferner kann vorgesehen sein, dass eine weitere Vorpumpe (nicht gezeigt) zum Evakuieren der zweiten Vakuumkammer 42 verwendet wird und die Vorpumpe 51 nicht mit der zweiten Vakuumkammer 42 verbunden ist.

In einem Ausführungsbeispiel ist, wie ebenfalls in Fig. 13 gezeigt, ein Ausgleichsventil 53 zwischen der ersten Vakuumkammer 41 und der zweiten Vakuumkammer 42 angeordnet. Das Ausgleichsventil 53 ist im Ausführungsbeispiel der Fig. 13 zwischen den Verbindungen der Vakuumpumpen 51, 52 und den Vakuumkammern 41, 42 angeordnet. Das Ausgleichsventil 53 ist eingerichtet, einen Druckunterschied zwischen der ersten Vakuumkammer und der zweiten Vakuumkammer auszugleichen, wenn der Druckunterschied größer als 5 mbar ist.

In einem Ausführungsbeispiel ist das Ausgleichsventil 53 als Überdruckventil ausgestaltet. Dieses Überdruckventil kann beispielsweise eine Membran aufweisen, die bei einem Überdruck oder bei einem Druckunterschied von mehr als 5 mbar bricht und somit für einen Druckausgleich zwischen der ersten Vakuumkammer 41 und der zweiten Vakuumkammer 42 sorgt.

Das Ausgleichsventil 53 kann auch als gesteuertes Ventil ausgestaltet sein. In diesem Fall ist eine Ventilsteuerung 54 mit dem Ausgleichsventil 53 sowie einem ersten Drucksensor 55 der ersten Vakuumkammer 41 und einem zweiten Drucksensor 56 der zweiten Vakuumkammer 42 verbunden. Mit der Ventilsteuerung 54 können Signale des ersten Drucksensors 55 und des zweiten Drucksensors 56 verglichen werden und bei Vorliegen eines Druckunterschieds von mehr als 5 mbar das Ausgleichsventil 53 entsprechend geöffnet werden, um den Druckausgleich bereitzustellen. Selbstverständlich kann auch ein anderer Druckunterschied gewählt werden, wobei der Druckunterschied insbesondere von der Stabilität der Trennvorrichtung 20 und auch von der Dicke der Trennvorrichtung 20 beeinflusst sein kann.

An der zweiten Vakuumkammer 42 ist ferner eine Vakuumdurchführung 57 angeordnet. Die Statormodule 10 sind mit der Vakuumdurchführung 57 verbunden, wobei die Vakuumdurchführung 57 eingerichtet ist, eine Datenverbindung und eine Stromversorgung für die Statormodule 10 von außerhalb der zweiten Vakuumkammer 42 bereitzustellen.

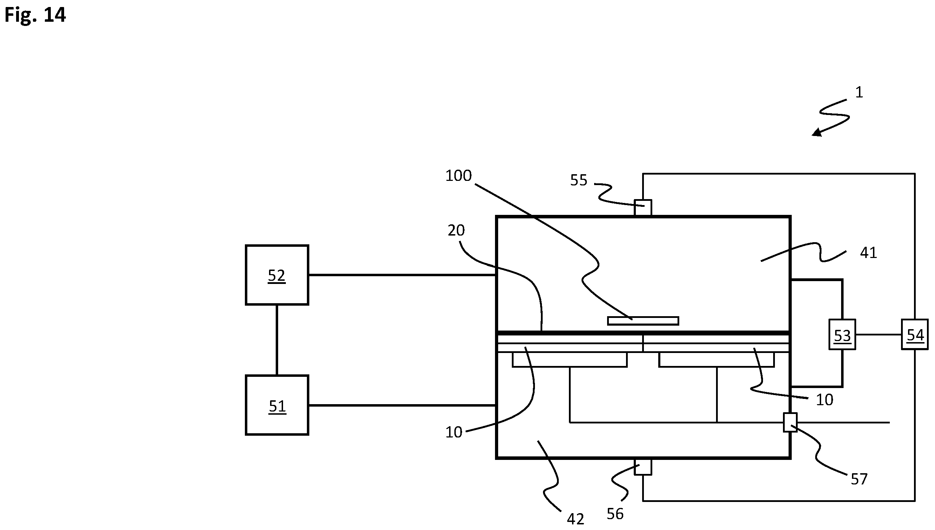

Fig. 14 zeigt ein Planarantriebssystem 1, das dem Planarantriebssystem 1 der Fig. 13 entspricht, sofern im Folgenden keine Unterschiede beschrieben sind. Lediglich das Ausgleichsventil 53 ist in diesem Ausführungsbeispiel direkt mit der ersten Vakuumkammer 41 und der zweiten Vakuumkammer 42 verbunden und nicht über die Verbindungen zu den Vakuumpumpen 51, 52.

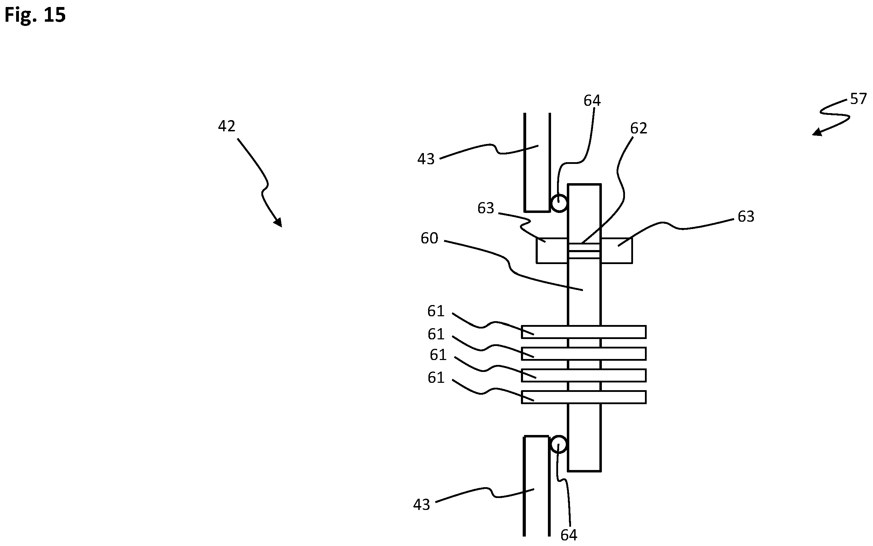

Fig. 15 zeigt eine vergrößerte Prinzipdarstellung einer Vakuumdurchführung 57. Die Vakuumdurchführung 57 umfasst eine Leiterplatte 60. Die Leiterplatte 60 weist Pins 61 zur Stromdurchführung und Vias 62 für die Datenverbindung auf. Die Vias 62 sind jeweils mit einer Buchse 63 auf beiden Seiten der Leiterplatte 60 verbunden. Mittels einer Dichtung 64 ist die Leiterplatte 60 an der Kammerwand 43 befestigt und bildet somit einen Teil einer Kammerwand 43 der zweiten Vakuumkammer 42. Insbesondere ist die Leiterplatte 60 so also Teil einer Wand der zweiten Vakuumkammer 42. Die Leiterplatte 60 und die Dichtung 64 sind dabei auf einer der zweiten Vakuumkammer 42 abgewandten Seite der Kammerwand 43 angeordnet, da durch diese Anordnung eine selbsttätige beziehungsweise unterstütze Abdichtung aufgrund des Vakuums erfolgen kann. Alternativ ist es aber auch möglich, die Leiterplatte 60 und die Dichtung 64 auf einer der zweiten Vakuumkammer 42 zugewandten Seite der Kammerwand 43 anzuordnen. An den Buchsen 63 können konventionelle Netzwerkkabel angesteckt und zur Datenverbindung mit den Statormodulen 10 genutzt werden. Mittels der Pins 61 können Ströme zur Stromversorgung der Statormodule 10 bereitgestellt werden. Mittels einer solchen Vakuumdurchführung 57 basierend auf der Leiterplatte 60 kann eine einfach herzustellende Vakuumdurchführung bereitgestellt werden, die den Anforderungen für das Vakuum innerhalb der zweiten Vakuumkammer 42 entspricht, da in dieser kein Ultrahochvakuum notwendig ist. Somit kann konventionelle Technik für die Vakuumdurchführung 57 verwendet werden und der Einsatz von teuren Keramikdurchführungen ist nicht zwingend erforderlich.

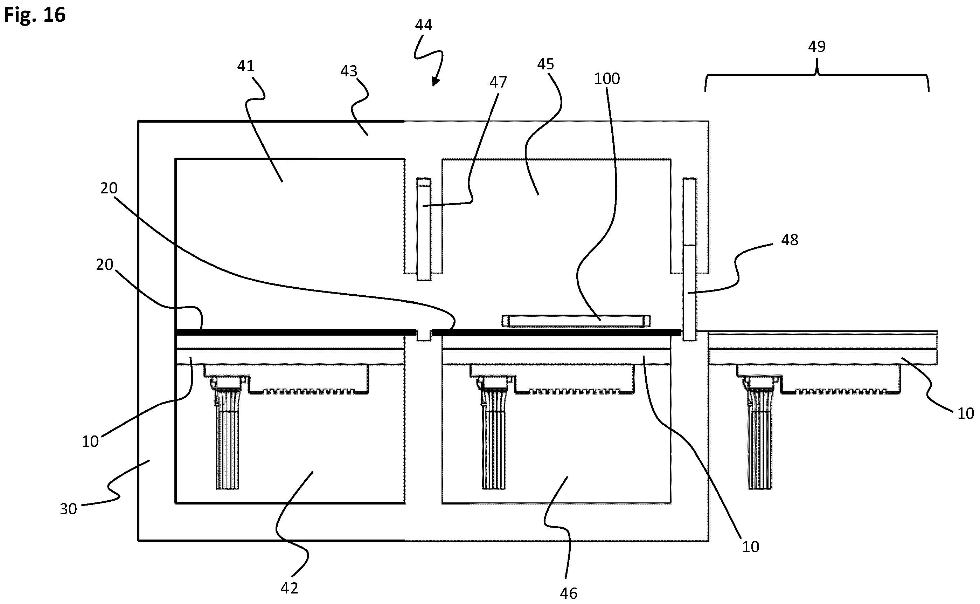

Fig. 16 (nicht Ausführungsbeispiel der beanspruchten Erfindung) zeigt eine Vakuumschleuse 44, mit der ein Läufer 100 von außerhalb eines Vakuums innerhalb eines Vakuums eingeschleust werden kann. Es sind drei Statormodule 10 gezeigt, wobei eines der Statormodule 10 in der zweiten Vakuumkammer 42 mit darüberliegender, von dieser mittels der Trennvorrichtung 20 getrennter ersten Vakuumkammer 41 angeordnet ist. Mittels eines ersten Tores 47 ist die erste Vakuumkammer 41 von einer dritten Vakuumkammer 45 getrennt. Die dritte Vakuumkammer 45 ist mittels einer Trennvorrichtung 20 von einer vierten Vakuumkammer 46 getrennt, in der ebenfalls ein Statormodul 10 angeordnet ist. Mittels eines zweiten Tores 48 ist die dritte Vakuumkammer 45 von einem äußeren Bereich 49 getrennt, in dem ebenfalls ein Statormodul 10 angeordnet ist. Ein Läufer 100 kann vom äußeren Bereich 49 in die dritte Vakuumkammer 45 bewegt werden, wenn das erste Tor 47 zwischen der ersten Vakuumkammer 41 und der dritten Vakuumkammer 45 geschlossen und das zweite Tor 48 zwischen der dritten Vakuumkammer 45 und dem äußeren Bereich 49 geöffnet ist. Nun können die dritte Vakuumkammer 45 und die vierte Vakuumkammer 46 nach dem Einfahren des Läufers 100 in die dritte Vakuumkammer 45 und dem Schließen des zweiten Tores 48 evakuiert werden. Anschließend kann das erste Tor 47 zwischen der ersten Vakuumkammer 41 und der dritten Vakuumkammer 45 geöffnet werden und der Läufer 100 in die erste Vakuumkammer 41 bewegt werden. Die dabei zwischen den Statormodulen 10 vorliegenden Spalte können vom Läufer 100 überwunden werden.

Eine analoge Anordnung kann auch vorgesehen sein, wenn anstelle von Vakuumkammern das Arbeitsgehäuse 30 einen Reinraum umfassen soll. Die unteren Bereiche für die Statormodule müssen in diesem Fall nicht hermetisch abgeschlossen sein, und es genügt, zu der ersten Vakuumkammer 41 und der dritten Vakuumkammer 45 analoge Bereiche für das Einschleusen des Läufers 100 in den Reinraum bereitzustellen.

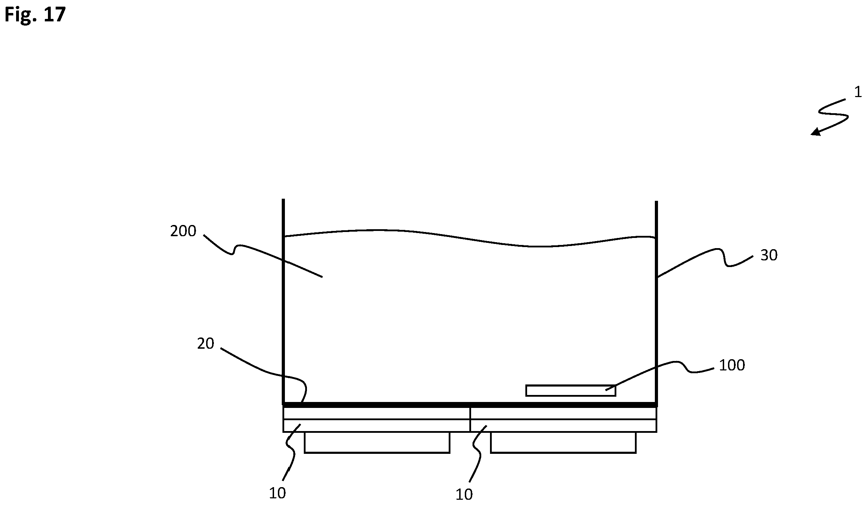

Fig. 17 zeigt ein Planarantriebssystem 1 mit zwei Statormodulen 10, einem Läufer 100 und einer Trennvorrichtung 20 zwischen den Statormodulen 10 und dem Läufer 100. Die Trennvorrichtung 20 ist wiederum Teil eines Arbeitsgehäuses 30, wobei sich im Arbeitsgehäuse 30 eine Flüssigkeit 200 befindet. Die Flüssigkeit 200 kann dabei insbesondere aggressiv für die Magneteinheiten 114 oder einen Kleber, mit dem die Magneteinheiten 114 im Läufer 100 festgeklebt sind, sein und somit ist es sinnvoll, das Gehäuse 110 des Läufers 100 fluiddicht wie im Zusammenhang mit den Fig. 1 bis 10 beschrieben, auszugestalten.

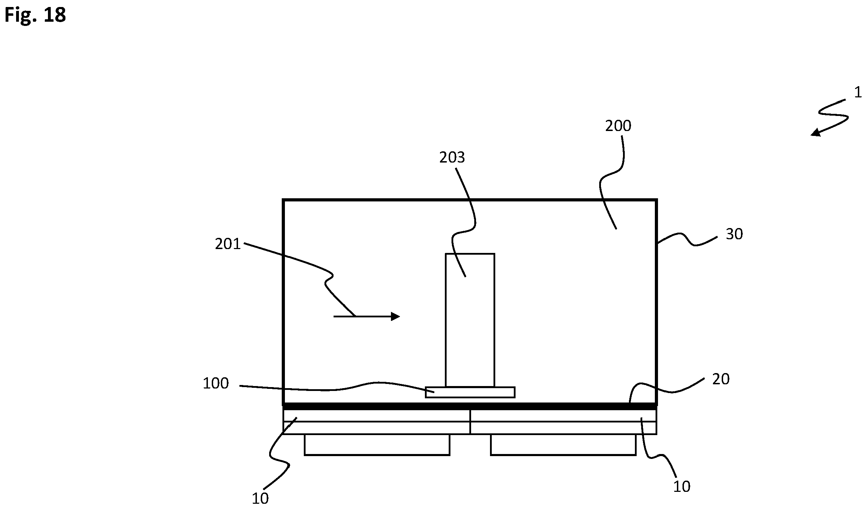

Fig. 18 zeigt ein Planarantriebssystem 1, bei dem das Arbeitsgehäuse 30 ebenfalls mit einer Flüssigkeit 200 gefüllt ist. Im Wesentlichen entspricht das Planarantriebssystem 1 dabei dem Planarantriebssystem 1 der Fig. 17, sofern im Folgenden keine Unterschiede beschrieben sind. Das Arbeitsgehäuse 30 ist in diesem Fall vollständig geschlossen. Eine erste Flüssigkeitsströmung 201 bewegt sich innerhalb des Arbeitsgehäuses 30. Der Läufer 100 weist ein Leitblech 203 auf.

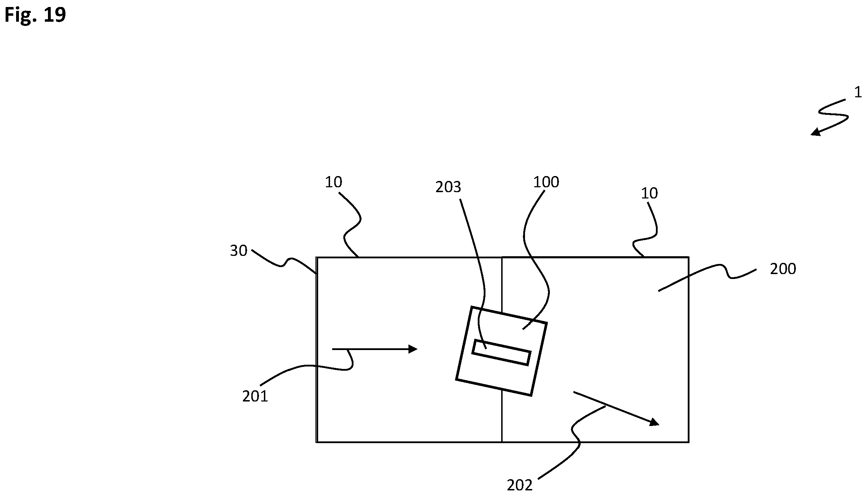

Fig. 19 zeigt eine Draufsicht auf das Planarantriebssystem 1 der Fig. 18. Der Läufer 100 ist dabei, wie in anderen Anmeldungen der Anmelderin beschrieben, drehbar ausgestaltet. Durch das Leitblech 203 kann die erste Flüssigkeitsströmung 201 abgelenkt und dadurch eine zweite Flüssigkeitsströmung 202 mit einer anderen Richtung erzeugt werden. Dadurch, dass der Läufer 100 flexibel innerhalb des Arbeitsgehäuses 30 bewegt werden kann, können somit Flüssigkeitsströmungen innerhalb des Arbeitsgehäuses 30 beeinflusst werden. Dabei ist zu beachten, dass an jedem beliebigen Punkt oberhalb der Statorfläche 13 der Läufer um bis zu 20° aus einer Ruhelage rotiert werden kann. In speziellen Rotationspositionen, die jeweils den Zusammentreffpunkt von vier Statoreinheiten 11 beinhalten, können die Läufer 100 auch vollständig rotiert werden.

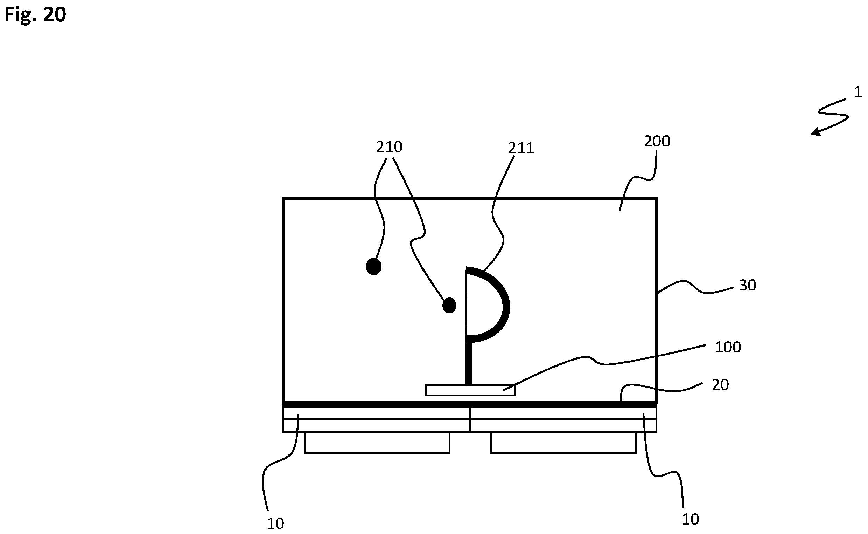

Fig. 20 zeigt ein Planarantriebssystem 1, das dem Planarantriebssystem 1 der Fig. 17 entspricht, sofern im Folgenden keine Unterschiede beschrieben sind. Es sind Objekte 210 innerhalb des Arbeitsgehäuses 30 angeordnet. Der Läufer 100 weist eine Fangvorrichtung 211 auf, mit der die in der Flüssigkeit 200 schwebenden oder sich bewegenden Objekte 210 eingefangen werden können. Die Objekte 210 können dabei von Fischen bis zu Verunreinigungen ein weites Feld von Objekten 210 abdecken. Dadurch, dass der Läufer 100 in beliebige Positionen bewegt werden kann, kann somit ein Objektfangsystem bereitgestellt werden. Die Fangvorrichtung 211 kann dazu ein Sieb, einen Kescher, einen Fangbehälter und/oder einen Filter umfassen. Ferner können nicht-gezeigte Sensoren zum Erkennen der Objekte 210 vorgesehen sein.

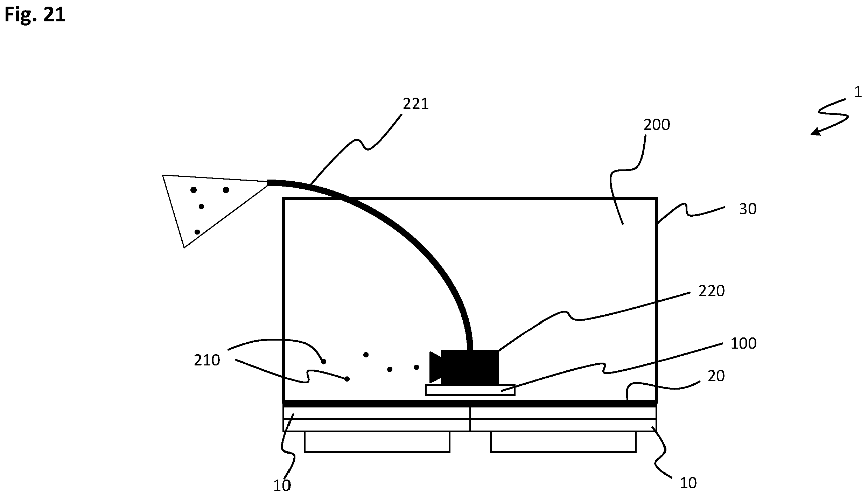

Fig. 21 zeigt ein Planarantriebssystem 1, das dem Planarantriebssystem 1 der Fig. 17 entspricht, sofern im Folgenden keine Unterschiede beschrieben sind. Auf dem Läufer 100 ist eine Pumpe 220 angeordnet, mit der innerhalb der Flüssigkeit 200 vorhandene Objekte 210 aus der Flüssigkeit 200 herausgepumpt und über einen Schlauch 221 nach außerhalb des Arbeitsgefäßes 30 bewegt werden können. Dabei kann vorgesehen sein, dass die Pumpe 220 von außerhalb des Arbeitsgefäßes 30 mittels eines Kabels oder mittels Batterien mit Energie versorgt wird. Es kann ferner vorgesehen sein, dass ein Schaufelrad mit einem Generator auf dem Läufer angeordnet ist, mit dem elektrische Energie für die Pumpe 220 bereitgestellt wird. Ferner kann vorgesehen sein, dass ein Schaufelrad am Läufer 100 die Pumpe 220 direkt antreibt. Der Antrieb kann dann dadurch erfolgen, dass eine Bewegung des Läufers 100 innerhalb der Flüssigkeit 200 zu einer Bewegung des Schaufelrads führt und dadurch die Pumpe 220 angetrieben wird.

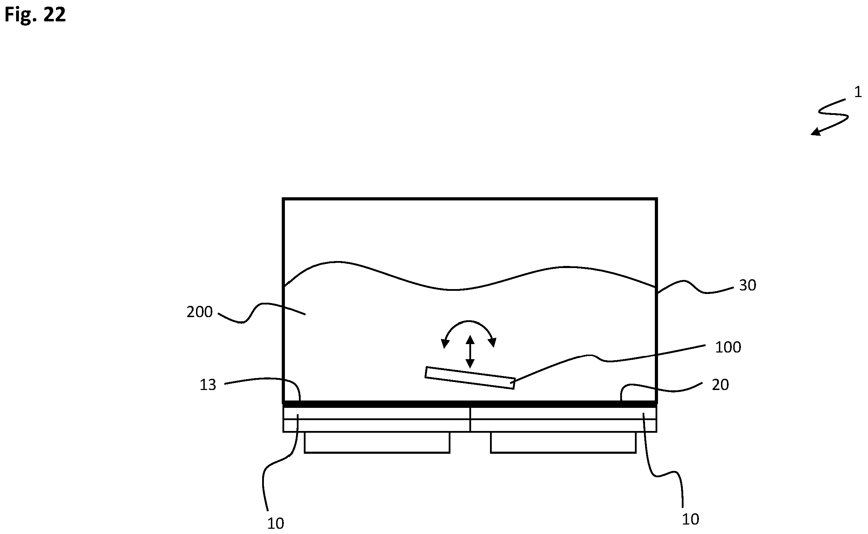

Fig. 22 zeigt ein weiteres Planarantriebssystem 1, das dem Planarantriebssystem 1 der Fig. 17 entspricht, sofern im Folgenden keine Unterschiede beschrieben sind. Das Arbeitsgehäuse 30 ist im Gegensatz zur Fig. 17 nicht vollständig, sondern nur teilweise mit der Flüssigkeit 200 gefüllt. Durch Bewegungen des Läufers 100 wie beispielsweise Bewegungen senkrecht zur Statorfläche 13, oder durch Neigen des Läufers 100 aus der Ruhelage kann dabei ein Wellenschlag der Flüssigkeit 200 erzeugt werden.

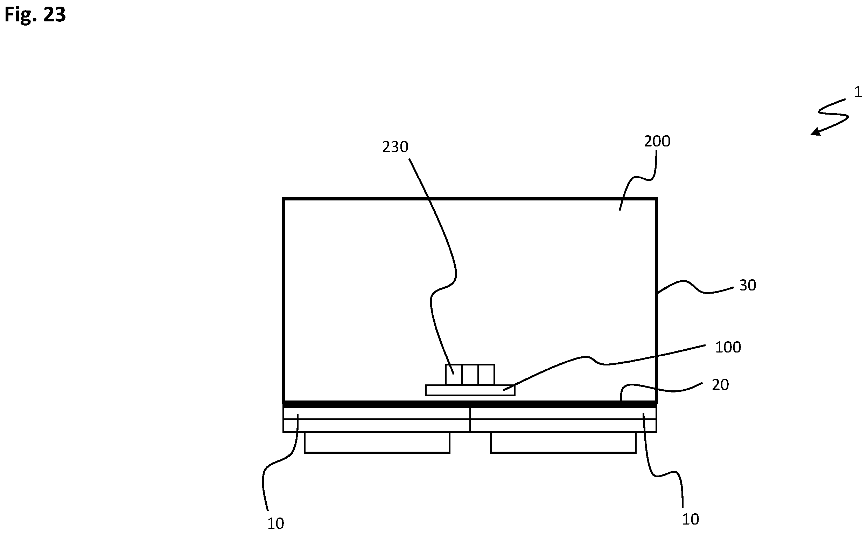

Fig. 23 zeigt ein Planarantriebssystem 1, das dem Planarantriebssystem 1 der Fig. 17 entspricht, sofern im Folgenden keine Unterschiede beschrieben sind. Der Läufer 100 weist ein Schaufelrad 230 auf, welches an Rotationspositionen am Berührpunkt von vier Statoreinheiten 11 rotiert werden kann, indem an dieser Position eine Rotation des Läufers 100 ausgeführt wird. Dadurch kann die Flüssigkeit 200 mittels der Rotation des Läufers 100 und des Schaufelrads 230 durchmischt werden. Durch die Möglichkeit, den Läufer 100 individuell anzusteuern, können dabei beliebige Vermischungstrajektorien erzeugt werden.

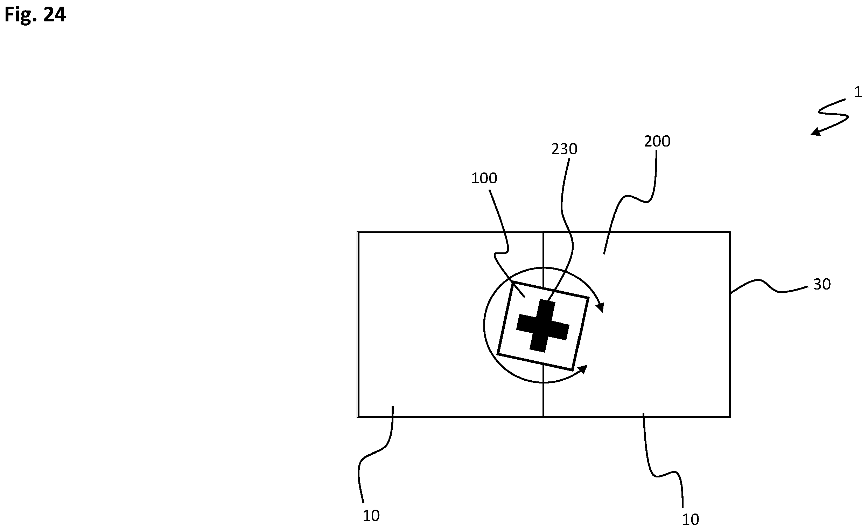

Fig. 24 zeigt eine Draufsicht auf das Planarantriebssystem 1 der Fig. 23. Der Läufer 100 ist aus seiner Ruhelage rotiert. Der Läufer 10 ist dabei, wie in anderen Anmeldungen der Anmelderin beschrieben, drehbar ausgestaltet. Dadurch, dass der Läufer 10 flexibel innerhalb des Arbeitsgehäuses 30 bewegt werden kann, können somit Flüssigkeitsströmungen innerhalb des Arbeitsgehäuses 30 beeinflusst werden. Dabei ist zu beachten, dass an jedem beliebigen Punkt oberhalb der Statorfläche 13 der Läufer um bis zu 20° aus einer Ruhelage rotiert werden kann. In speziellen Rotationspositionen, die jeweils den Zusammentreffpunkt von vier Statoreinheiten 11 beinhalten, können die Läufer 10 auch vollständig rotiert werden.

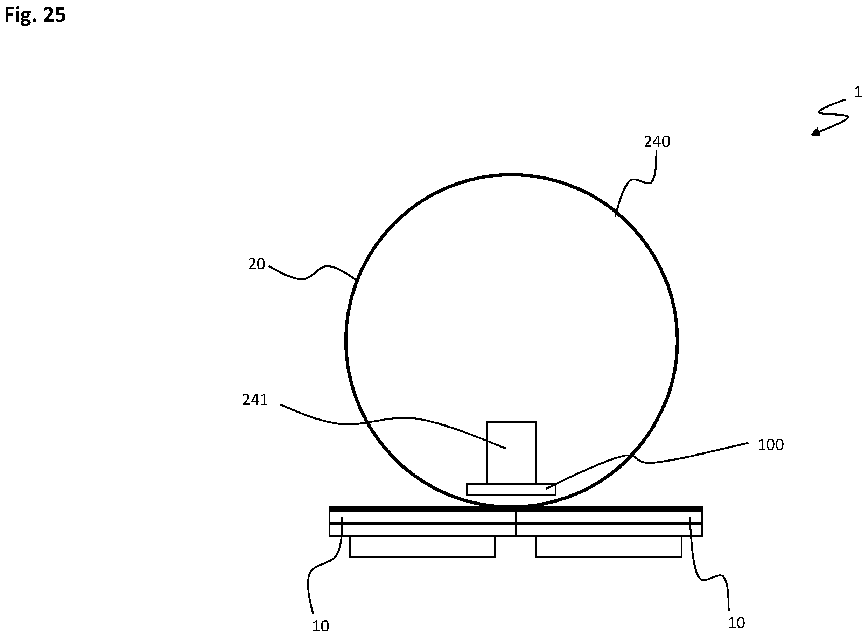

Fig. 25 (nicht Ausführungsbeispiel der beanspruchten Erfindung) zeigt einen Querschnitt durch ein weiteres Planarantriebssystem 1. In diesem Ausführungsbeispiel sind ebenfalls zwei Statormodule 10 mit einem oberhalb der Statormodule 10 angeordneten Läufer 100 angeordnet. Die Trennvorrichtung 20 ist in diesem Ausführungsbeispiel Teil eines zu bearbeitenden oder untersuchenden Produkts 240. Eine Wand des Produkts ist zwischen den Statormodulen 10 und dem Läufer 100 geführt. Auf dem Läufer 100 ist ein Mess- oder Bearbeitungskopf 241 angeordnet, mit dem das Produkt 240 untersucht oder bearbeitet werden kann.

### Bezugszeichenliste

- 1: Planarantriebssystem
- 10: Statormodul
- 11: Statoreinheit
- 12: Spulenanordnung
- 13: Statorfläche
- 20: Trennvorrichtung
- 21: erste Seite
- 22: zweite Seite
- 23: Dicke
- 30: Arbeitsgehäuse
- 31: Innenbereich
- 41: erste Vakuumkammer
- 42: zweite Vakuumkammer
- 43: Kammerwand
- 44: Vakuumschleuse
- 45: dritte Vakuumkammer
- 46: vierte Vakuumkammer
- 47: erstes Tor
- 48: zweites Tor
- 49: äußerer Bereich
- 51: Vorpumpe
- 52: Turbopumpe
- 53: Ausgleichsventil
- 54: Ventilsteuerung
- 55: erster Drucksensor
- 56: zweiter Drucksensor
- 57: Vakuumduchführung
- 60: Leiterplatte
- 61: Pin
- 62: Via
- 63: Buchse
- 64: Dichtung
- 100: Läufer
- 101: Befestigungsvorrichtung
- 102: Durchgangsloch
- 103: Oberseite
- 104: Unterseite
- 105: Seitenfläche
- 110: Gehäuse
- 111: Gehäusegrundkörper
- 112: Abdeckung
- 113: Ausnehmung
- 114: Magnetanordnung
- 115: Inneres
- 116: Laserschweißverbindung
- 117: Randbereich
- 118: Metallblechdicke
- 119: Vergussmasse
- 130: Evakuierungsvorrichtung
- 131: Rohr
- 132: verlöteter Bereich
- 200: Flüssigkeit
- 201: erste Flüssigkeitsströmung
- 202: zweite Flüssigkeitsströmung
- 203: Leitblech
- 210: Objekt
- 211: Fangvorrichtung
- 220: Pumpe
- 221: Schlauch
- 230: Schaufelrad
- 240: Produkt
- 241: Mess- oder Bearbeitungskopf

## Patentansprüche

1. Planarantriebssystem (1) mit zumindest einem Statormodul (10), wobei das Statormodul (10) zumindest eine Statoreinheit (11) mit zumindest einer Spulenanordnung (12) umfasst, wobei die Spulenanordnung (12) bestromt werden kann und eingerichtet ist, aufgrund einer Bestromung ein Statormagnetfeld oberhalb einer Statorfläche (13) zu erzeugen, und mit einem Läufer (100), wobei der Läufer (100) ein Gehäuse (110) und zumindest eine Magnetanordnung (114) umfasst, wobei das Gehäuse (110) einen Gehäusegrundkörper (111) und eine Abdeckung (112) aufweist, wobei die Magnetanordnung (114) in einer Ausnehmung (113) des Gehäusegrundkörpers (111) angeordnet ist, **dadurch gekennzeichnet, dass** die Abdeckung (112) derart am Gehäusegrundkörper (111) angebracht ist,
dass
das Gehäuse (110) fluiddicht ausgestaltet ist, die Abdeckung (112) die Ausnehmung (113) abdeckt und die Magnetanordnung (114) in einem Inneren (115) des fluiddichten Gehäuses (110) angeordnet ist, wobei der Läufer (100) mittels einer Wechselwirkung zwischen dem Statormagnetfeld und einem Läufermagnetfeld der Magnetanordnung (114) oberhalb der Statorfläche (13) bewegt werden kann, und mit einer Trennvorrichtung (20), wobei die Trennvorrichtung (20) oberhalb der Statorfläche (13) angeordnet ist, wobei das Statormodul (10) auf einer ersten Seite (21) der Trennvorrichtung (20) angeordnet ist und der Läufer (100) auf einer zweiten Seite (22) der Trennvorrichtung (20) angeordnet ist, wobei die Trennvorrichtung (20) Teil eines Arbeitsgehäuses (30) ist, wobei der Läufer (100) innerhalb des Arbeitsgehäuses (30) bewegt werden kann, und wobei die Trennvorrichtung (20) und die Abdeckung (112) des Läufers (100) nichtmagnetisch sind und eine relative magnetische Permeabilität kleiner als zehn, insbesondere kleiner als zwei und bevorzugt kleiner als 1,01 aufweisen.

2. Planarantriebssystem (1) nach Anspruch 1, wobei das Arbeitsgehäuse (30) eine erste Vakuumkammer (41) umfasst.

3. Planarantriebssystem (1) nach Anspruch 2, wobei das Statormodul (10) innerhalb einer zweiten Vakuumkammer (42) angeordnet ist, wobei die Trennvorrichtung (20) die erste Vakuumkammer (41) von der zweiten Vakuumkammer (42) abtrennt.

4. Planarantriebssystem (1) nach Anspruch 3, wobei zwischen der ersten Vakuumkammer (41) und der zweiten Vakuumkammer (42) ein Ausgleichsventil (53) angeordnet ist, wobei das Ausgleichsventil (53) eingerichtet ist, einen Druckunterschied zwischen der ersten Vakuumkammer (41) und der zweiten Vakuumkammer (41) auszugleichen, wenn der Druckunterschied größer als 5 Millibar ist.

5. Planarantriebssystem (1) nach Anspruch 4, wobei das Ausgleichsventil (53) als Überdruckventil ausgestaltet ist.

6. Planarantriebssystem (1) nach Anspruch 4, wobei das Ausgleichsventil (53) als gesteuertes Ventil ausgestaltet ist, wobei eine Ventilsteuerung (54) mit einem ersten Drucksensor (55) der ersten Vakuumkammer (41) und mit einem zweiten Drucksensor (56) der zweiten Vakuumkammer (42) verbunden ist.

7. Planarantriebssystem (1) nach einem der Ansprüche 3 bis 6, wobei das Statormodul (10) mit einer Vakuumdurchführung (57) verbunden ist, wobei die Vakuumdurchführung (57) eingerichtet ist, eine Datenverbindung und eine Stromversorgung für das Statormodul (10) von außerhalb der zweiten Vakuumkammer (42) bereitzustellen.

8. Planarantriebssystem (1) nach Anspruch 7, wobei die Vakuumdurchführung (57) eine Leiterplatte (60) umfasst, wobei die Leiterplatte (60) Teil einer Wand der zweiten Vakuumkammer (42) ist, wobei die Leiterplatte (60) Pins (61) zur Stromdurchführung und Vias (62) für die Datenverbindung umfasst.

9. Planarantriebssystem (1) nach einem der Ansprüche 2 bis 8, wobei die erste Vakuumkammer (41) mittels einer Vorpumpe (51) und einer Turbopumpe (52) evakuiert werden kann.

## Claims

1. A planar drive system (1) having at least one stator module (10), wherein the stator module (10) comprises at least one stator assembly (11) having at least one coil arrangement (12), wherein the coil arrangement (12) may be energized and is arranged to generate a stator magnetic field above a stator surface (13) due to an energization, and having a rotor (100), wherein the rotor (100) comprises a housing (110) and at least one magnet arrangement (114), the housing (110) comprising a basic housing body (111) and a cover (112), the magnet arrangement (114) being arranged in a recess (113) of the basic housing body (111), wherein the cover (112) is attached to the basic housing body (111) in such a way that
the housing (110) is embodied to be fluid-tight, the cover (112) covers the recess (113) and the magnet arrangement (114) is arranged in an interior (115) of the fluid-tight housing (110), wherein the rotor (100) may be moved above the stator surface (13) with the aid of an interaction between the stator magnetic field and a rotor magnetic field of the magnet arrangement (114), and having a separating device (20), wherein the separating device (20) is arranged above the stator surface (13), wherein the stator module (10) is arranged on a first side (21) of the separating device (20) and the rotor (100) is arranged on a second side (22) of the separating device (20), wherein the separating device (20) is part of an operating housing (30), wherein the rotor (100) is movable within the operating housing (30), and wherein the separating device (20) and the cover (112) of the rotor (100) are non-magnetic and has a relative magnetic permeability smaller than ten, in particular smaller than two and preferably smaller than 1.01.

2. The planar drive system (1) according to claim 1, wherein the operating housing (30) comprises a first vacuum chamber (41).

3. The planar drive system (1) according to claim 2, wherein the stator module (10) is arranged within a second vacuum chamber (42), wherein the separating device (20) separates the first vacuum chamber (41) from the second vacuum chamber (42).

4. The planar drive system (1) according to claim 3, wherein an equalizing valve (53) is arranged between the first vacuum chamber (41) and the second vacuum chamber (42), wherein the equalizing valve (53) is arranged to equalize a pressure difference between the first vacuum chamber (41) and the second vacuum chamber (41) when the pressure difference is larger than 5 millibars.

5. The planar drive system (1) according to claim 4, wherein the equalizing valve (53) is configured as a pressure relief valve.

6. The planar drive system (1) according to claim 4, wherein the equalizing valve (53) is configured as a controlled valve, wherein a valve control (54) is connected to a first pressure sensor (55) of the first vacuum chamber (41) and to a second pressure sensor (56) of the second vacuum chamber (42).

7. The planar drive system (1) according to any one of claims 3 to 6, wherein the stator module (10) is connected to a vacuum duct (57), the vacuum duct (57) being set up to provide a data connection and a current supply to the stator module (10) from outside of the second vacuum chamber (42).

8. The planar drive system (1) according to claim 7, wherein the vacuum duct (57) comprises a printed circuit board (60), the printed circuit board (60) being part of a wall of the second vacuum chamber (42), the printed circuit board (60) comprising pins (61) for current feedthrough and vias (62) for data connection.

9. The planar drive system (1) according to any one of claims 2 to 8, wherein the first vacuum chamber (41) may be evacuated with the aid of a backing pump (51) and a turbopump (52).

## Revendications

1. Système d'entraînement planaire (1) comprenant au moins un module stator (10), le module stator (10) comprenant au moins une unité de stator (11) avec au moins un arrangement de bobines (12), l'arrangement de bobines (12) pouvant être alimenté électriquement et étant conçu pour, du fait d'une alimentation électrique, générer un champ magnétique de stator au-dessus d'une surface de stator (13), et comprenant un rotor (100), le rotor (100) comprenant un boîtier (110) et au moins un arrangement d'aimants (114), le boîtier (110) possédant un corps de base de boîtier (111) et un couvercle (112), l'arrangement d'aimants (114) étant disposé dans un évidement (113) du corps de base de boîtier (111), **caractérisé en ce que** le couvercle (112) est monté sur le corps de base de boîtier (111) de telle sorte que le boîtier (110) est configuré étanche aux fluides, le couvercle (112) recouvre l'évidement (113) et l'arrangement d'aimants (114) est disposé dans un espace intérieur (115) du boîtier (110) étanche aux fluides, le rotor (100) pouvant être déplacé au-dessus de la surface de stator (13) au moyen d'une interaction entre le champ magnétique de stator et un champ magnétique de rotor de l'arrangement d'aimants (114), et comprenant un dispositif de séparation (20), le dispositif de séparation (20) étant disposé au-dessus de la surface de stator (13), le module stator (10) étant disposé sur un premier côté (21) du dispositif de séparation (20) et le rotor (100) étant disposé sur un deuxième côté (22) du dispositif de séparation (20), le dispositif de séparation (20) faisant partie d'un carter de travail (30), le rotor (100) pouvant être déplacé à l'intérieur du carter de travail (30), et le dispositif de séparation (20) et le couvercle (112) du rotor (100) étant non magnétiques et présentant une perméabilité magnétique relative inférieure à dix, en particulier inférieure à deux et de préférence inférieure à 1,01.

2. Système d'entraînement planaire (1) selon la revendication 1, le carter de travail (30) comprenant une première chambre à vide (41).

3. Système d'entraînement planaire (1) selon la revendication 2, le module stator (10) étant disposé à l'intérieur d'une deuxième chambre à vide (42), le dispositif de séparation (20) séparant la première chambre à vide (41) de la deuxième chambre à vide (42).

4. Système d'entraînement planaire (1) selon la revendication 3, une vanne de compensation (53) étant disposée entre la première chambre à vide (53) et la deuxième chambre à vide (41), la vanne de compensation (41) étant conçue pour compenser une différence de pression entre la première chambre à vide (42) et la deuxième chambre à vide (41) lorsque la différence de pression est supérieure à 5 millibars.

5. Système d'entraînement planaire (1) selon la revendication 4, la vanne de compensation (53) étant réalisée sous la forme d'une vanne de surpression.

6. Système d'entraînement planaire (1) selon la revendication 4, la vanne de compensation (53) étant réalisée sous la forme d'une vanne commandée, une commande de vanne (54) étant reliée à un premier capteur de pression (55) de la première chambre à vide (41) et à un deuxième capteur de pression (56) de la deuxième chambre à vide (42).

7. Système d'entraînement planaire (1) selon l'une des revendications 3 à 6, le module stator (10) étant relié à une traversée sous vide (57), la traversée sous vide (57) étant conçue pour fournir une connexion de données et une alimentation électrique pour le module stator (10) depuis l'extérieur de la deuxième chambre à vide (42).

8. Système d'entraînement planaire (1) selon la revendication 7, la traversée sous vide (57) comprenant une carte de circuit imprimé (60), la carte de circuit imprimé (60) étant une partie d'une paroi de la deuxième chambre à vide (42), la carte de circuit imprimé (60) comprenant des broches (61) pour le passage de courant et des trous d'interconnexion (62) pour la connexion de données.

9. Système d'entraînement planaire (1) selon l'une des revendications 2 à 8, la première chambre à vide (41) pouvant être mise sous vide au moyen d'une pompe à prévide (51) et d'une turbopompe (52).
